# EUROPEAN PATENT SPECIFICATION

(11) **EP 3 343 687 B1**
(45) Date of publication and mention of the grant of the patent: **24.02.2021**
(21) Application number: 16841438.1
(22) Date of filing: 09.08.2016
(51) Int. Cl.: H01M 10/0567, H01M 10/052, H01M 4/66, H01M 10/0525

(54) **NON-AQUEOUS ELECTROLYTE SOLUTION FOR BATTERIES AND LITHIUM SECONDARY BATTERY COMPRISING THE SAME**
NICHTWÄSSRIGE ELEKTROLYTLÖSUNG FÜR BATTERIEN UND LITHIUMSEKUNDÄRBATTERIE DIESELBE UMFASSEND
SOLUTION ÉLECTROLYTIQUE NON-AQUEUSE POUR BATTERIES, ET BATTERIE RECHARGEABLE AU LITHIUM LA COMPRENANT

(30) Priority: 28.08.2015 JP 2015169576; 28.08.2015 JP 2015169755; 28.08.2015 JP 2015169756
(43) Date of publication of application: 04.07.2018
(73) Proprietor: Mitsui Chemicals, Inc., Minato-ku Tokyo 105-7122 (JP)
(72) Inventor: MIYASATO, Masataka, Sodegaura-shi Chiba 299-0265 (JP); TANAKA, Toshihiro, Sodegaura-shi Chiba 299-0265 (JP); GOTO, Kenichi, Sodegaura-shi Chiba 299-0265 (JP); HAYASHI, Takashi, Tokyo 105-7122 (JP)
(74) Representative: J A Kemp LLP
(86) International application number: PCT/JP2016/073432
(87) International publication number: WO 2017/038406

(56) References cited:
- WO-A1-2008/032657
- WO-A1-2012/053644
- WO-A1-2014/115403
- WO-A1-2015/045989
- JP-A- H0 613 070
- JP-A- H08 171 936
- JP-A- 2002 231 306
- JP-A- 2003 007 339
- JP-A- 2006 172 726
- JP-A- 2009 117 081
- US-A1- 2014 080 010

## Description

### Technical Field

The present invention relates to a non-aqueous electrolyte solution for a battery and a lithium secondary battery that can be charged and discharged and that can be used, for example, for a power source of a portable electric instrument, for adapting for a car, or for electric power storage.

### Background Art

In recent years, lithium secondary batteries are widely used as power sources for electronic devices such as portable telephones and notebook computers, for electric cars, or electric power storage. Particularly recently, there is a rapidly increasing demand for a battery with a high capacity, a high power and a high energy density, which can be mounted on hybrid cars or electric cars.

Lithium secondary batteries include, for example, a positive electrode and a negative electrode, which contain materials capable of absorption and desorption of lithium, and a non-aqueous electrolyte solution for a battery, which contains a lithium salt and a non-aqueous solvent.

Examples of positive electrode active materials used in a positive electrode include lithium metal oxides such as LiCoO₂, LiMnO₂, LiNiO₂, and LiFePO₄.

Furthermore, as the non-aqueous electrolyte solution for a battery, a solution prepared by mixing a mixed solvent (non-aqueous solvent) of a carbonate compound such as ethylene carbonate, propylene carbonate, dimethyl carbonate, or ethyl methyl carbonate, with a Li electrolyte such as LiPF₆, LiBF₄, LiN(SO₂CF₃)₂, or LiN(SO₂CF₂CF₃)₂ is used..

On the other hand, as the active material for a negative electrode that is used in a negative electrode, metal lithium, a metal compound (an elemental metal, oxide, an alloy with lithium, and the like) capable of absorption and desorption of lithium, and a carbon material are known. Particularly, a lithium secondary battery employing cokes, artificial graphite, or natural graphite, each being capable of absorption and desorption of lithium, has been put to practical use.

In order to improve performance of a battery (such as a lithium secondary battery) including the non-aqueous electrolyte solution for a battery, various additives are incorporated into a non-aqueous electrolyte solution for a battery.

For example, as a non-aqueous electrolyte solution for a battery that can improve storage characteristics of a battery, there is known a non-aqueous electrolyte solution for a battery containing at least one of lithium monofluorophosphate and lithium difluorophosphate as an additive (for example, see Patent Literature 1).

Furthermore, as an electrolyte that is contained in a non-aqueous electrolyte solution for a battery and that is excellent in heat resistance and hydrolysis resistance, there is known a lithium salt including a boron atom or a phosphorus atom and having a specified structure (for example, see Patent Literature 2).

Furthermore, as a lithium secondary battery that is excellent in battery characteristics such as cycle characteristics, electric capacity, and storage characteristics, and also excellent in low temperature characteristics, there is known a lithium secondary battery including a positive electrode, a negative electrode, and a non-aqueous electrolyte solution with an electrolyte dissolved in a non-aqueous solvent, in which the positive electrode is made of a material containing a lithium composite oxide, the negative electrode is made of a material containing graphite, the non-aqueous solvent mainly contains a cyclic carbonate and an acyclic carbonate, and the non-aqueous solvent contains from 0.1% by weight to 4% by weight of 1,3-propanesultone and/or 1,4-butanesultone (for example, see Patent Literature 3).

Furthermore, as a non-aqueous electrolyte solution secondary battery that can trap metal impurities, thereby suppressing generation of dendrite and suppressing generation of internal short circuit, there is known a non-aqueous electrolyte solution secondary battery provided with a non-aqueous electrolyte solution including a compound having a β-diketone partial structure and a complex of β-diketone with at least one metal selected from iron, nickel, copper, cobalt and zinc (for example, see Patent Literature 4).

Patent Literature 5 describes a non-aqueous electrolyte secondary battery comprising a non-aqueous electrolyte which contains a complex containing copper (I) chloride as a constituent component which is capable of absorbing at least carbon monoxide and carbon dioxide, and a coating film that contains at least one of phosphorus and boron which is formed on the surface of the negative electrode active material.

Patent Literature 6 relates to an electrolyte for a lithium-ion secondary battery which is said to reduce the risk of the occurrence of micro-shorts. The electrolyte contains a gravimetric analysis reagent.

Patent Literature 7 describes an electrolyte solution for a battery which has a metal salt comprising a nitrogen-containing cyclic compound and a polyvalent metal.

Patent Literature 8 describes a lithium secondary battery in which the non-aqueous electrolyte contains Pb ions, Bi ions and T1 and further contains at least one metal ion selected from Cd, Mo, Cu, In, Sn, Sb, Re, Ag, T1 and Te.

Patent Literature 9 relates to a non-aqueous electrolyte secondary battery in which the non-aqueous solvent includes 30 to 70vol% ethylene carbonate at 25°C and 1atm and 0.01 to 0.10 mol/L lithium difluorophosphate and/or lithium monofluorophosphate and where the packing dentisty for the positive electroactive material layer is from 2.0 to 2.8 g/ml.

Patent Literature 10 describes a non-aqueous electrolyte solution for a battery, which includes an additive A which is a specified type of cyclic sulfate and additive B which is selected from the group consisting of an aromatic compound having at least one hydrogen atom or alkyl group and a carbamate, and which is a compound other than carbonate or a cyclic sulfate.

Patent Literature 1: Japanese Patent Publication (JP-B) No. 3439085
Patent Literature 2: JP-B No. 3722685
Patent Literature 3: Japanese Patent Application Laid-Open (JP-A) No. 2000-3724
Patent Literature 4: JP-A No. 2006-172726
Patent Literature 5: WO 2014/115403 A1
Patent Literature 6: JP 2009 117081 A
Patent Literature 7: JP 2002 231306 A
Patent Literature 8: JP H08 171936 A
Patent Literature 9: US 2014/080010 A1
Patent Literature 10: WO 2015/045989 A1

### SUMMARY OF INVENTION

### Technical Problem

However, as a result of studies by the inventors, it has been found that battery resistance may be increased in a battery including a non-aqueous electrolyte solution for a battery, in which the solution contains lithium monofluorophosphate, lithium difluorophosphate, a lithium salt including a boron atom or a phosphorus atom and having a specified structure, or a sulfonate ester compound having a specified structure.

Accordingly, an object of one aspect of the invention is to provide a non-aqueous electrolyte solution for a battery, which can reduce battery resistance while containing at least one additive selected from the group consisting of lithium monofluorophosphate, lithium difluorophosphate, a lithium salt including a boron atom or a phosphorus atom and having a specified structure, and a sulfonate ester compound having a specified structure, as well as a lithium secondary battery including the non-aqueous electrolyte solution for a battery.

### Solution to Problem

Solutions for solving the problem encompass the following aspects.
<1> A non-aqueous electrolyte solution for a battery, comprising a positive electrode, an electrolyte and a negative electrode comprising negative electrode current collector containing a copper element, said electrolyte solution comprising a copper compound and an additive (X) that is at least one compound selected from the group consisting of lithium monofluorophosphate, lithium difluorophosphate, a compound represented by the following Formula (XA), a sulfonate ester compound represented by the following Formula (A), a sulfonate ester compound represented by the following Formula (B), a sulfonate ester compound represented by the following Formula (C), and a sulfonate ester compound represented by the following Formula (D),
   wherein the non-aqueous electrolyte solution is to be incorporated into a battery as the electrolyte,
   wherein a content of a copper element with respect to a total amount of the non-aqueous electrolyte solution is from 0.001 ppm by mass to less than 5 ppm by mass, and
   wherein in a case in which the non-aqueous electrolyte solution is incorporated into a battery,_a content of a copper element with respect to a total amount of the non-aqueous electrolyte solution for a battery is from 0.001 ppm by mass to less than 5 ppm by mass: 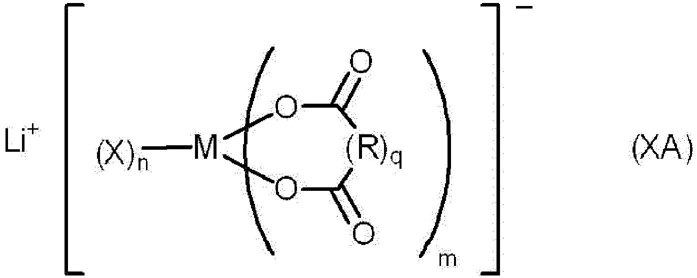 wherein, in Formula (XA), M represents a boron atom or a phosphorus atom, X represents a halogen atom, R represents an alkylene group having from 1 to 10 carbon atoms, a halogenated alkylene group having from 1 to 10 carbon atoms, an arylene group having from 6 to 20 carbon atoms, or a halogenated arylene group having from 6 to 20 carbon atoms, wherein such groups may each comprise a substituent or a hetero atom in a structure thereof, m represents an integer from 1 to 3, n represents an integer from 0 to 4, and q represents 0 or 1; 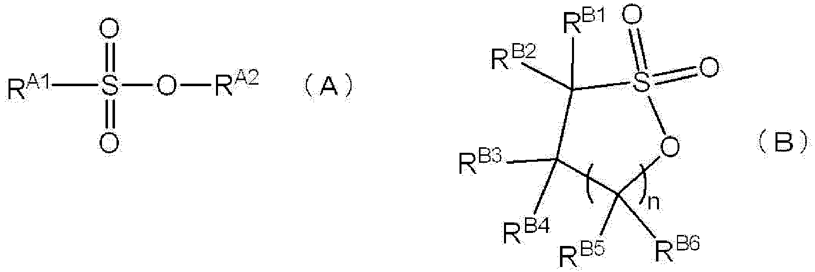 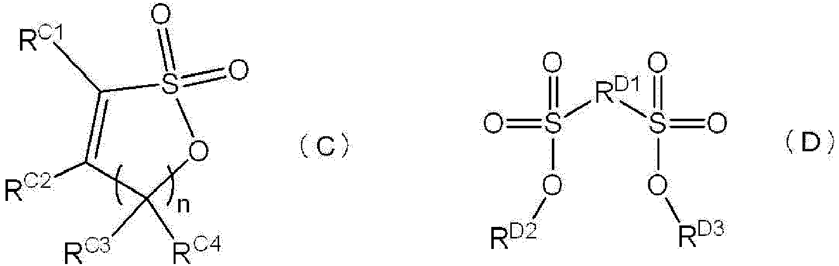
   wherein, in Formula (A), R^{A1} and R^{A2} each independently represent a straight or branched aliphatic hydrocarbon group having from 1 to 12 carbon atoms, an aryl group having from 6 to 12 carbon atoms, or a heterocyclic group having from 6 to 12 carbon atoms, wherein such groups may each be substituted with a halogen atom. the aliphatic hydrocarbon group may be substituted with at least one of an alkoxy group, an alkenyloxy group or an alkynyloxy group;
   wherein, in Formula (B), R^{B1} to R^{B6} each independently represent a hydrogen atom, a halogen atom, or an alkyl group having from 1 to 6 carbon atoms that may be substituted with a halogen atom, and n represents an integer from 0 to 3;
   wherein, in Formula (C), R^{C1} to R^{C4} each independently represent a hydrogen atom, a halogen atom, or an alkyl group having from 1 to 6 carbon atoms that may be substituted with a halogen atom, and n represents an integer from 0 to 3;
   wherein, in Formula (D), R^{D1} represents an aliphatic hydrocarbon group having from 1 to 10 carbon atoms, or a halogenated alkylene group having from 1 to 3 carbon atoms, R^{D2} and R^{D3} each independently represent an alkyl group having from 1 to 6 carbon atoms, or an aryl group, or R^{D2} and R^{D3} taken together represent an alkylene group having from 1 to 10 carbon atoms, or a 1,2-phenylene group that may be substituted with a halogen atom, an alkyl group having from 1 to 12 carbon atoms, or a cyano group.
<2> The non-aqueous electrolyte solution for a battery according to <1>, wherein the additive (X) is at least one of lithium monofluorophosphate or lithium difluorophosphate.
<3> The non-aqueous electrolyte solution for a battery according to <2>, wherein the additive (X) comprises lithium difluorophosphate.
<4> The non-aqueous electrolyte solution for a battery according to <1>, wherein the additive (X) is a compound represented by Formula (XA).
<5> The non-aqueous electrolyte solution for a battery according to <4>, wherein the compound represented by Formula (XA) is at least one selected from the group consisting of lithium difluorobis(oxalato)phosphate, lithium tetrafluoro(oxalato)phosphate, lithium difluoro(oxalato)borate and lithium bis(oxalato)borate.
<6> The non-aqueous electrolyte solution for a battery according to <1>, wherein the additive (X) is at least one compound selected from the group consisting of the sulfonate ester compound represented by Formula (A), the sulfonate ester compound represented by Formula (B), the sulfonate ester compound represented by Formula (C) and the sulfonate ester compound represented by Formula (D).
<7> The non-aqueous electrolyte solution for a battery according to any one of <1> to <6>, wherein a content of the additive (X) is from 0.001 % by mass to 5% by mass with respect to a total amount of the non-aqueous electrolyte solution.
<8> The non-aqueous electrolyte solution for a battery according to any one of <1> to <7>, further comprising a cyclic sulfate ester compound represented by the following Formula (I): 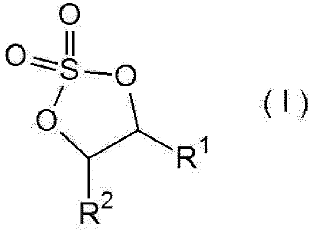 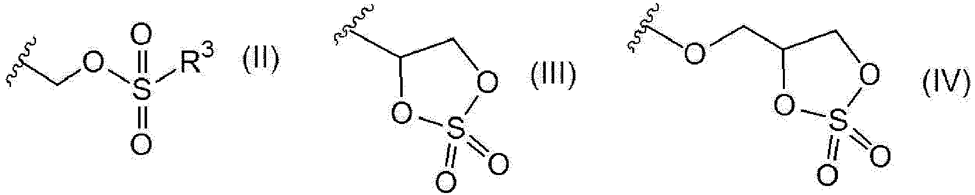 wherein, in Formula (I), R¹ and R² each independently represent a hydrogen atom, an alkyl group having from 1 to 6 carbon atoms, a phenyl group, a group represented by Formula (II), or a group represented by Formula (III), or R¹ and R² taken together represent a group that forms a benzene ring or a cyclohexyl ring together with a carbon atom bound to R¹ and a carbon atom bound to R²; and
   wherein, in Formula (II), R³ represents a halogen atom, an alkyl group having from 1 to 6 carbon atoms, a halogenated alkyl group having from 1 to 6 carbon atoms, an alkoxy group having from 1 to 6 carbon atoms, or a group represented by Formula (IV), and each wavy line in Formula (II), Formula (III), and Formula (IV) represents a bonding position; and
   in a case in which the cyclic sulfate ester compound represented by Formula (I) includes two groups represented by Formula (II), the two groups represented by Formula (II) may be the same as or different from each other.
<9> A lithium secondary battery comprising:
   a positive electrode;
   a negative electrode comprising a negative electrode current collector containing a copper element, and, as a negative electrode active material, at least one material selected from the group consisting of metal lithium, a lithium-containing alloy, a metal or an alloy capable of alloying with lithium, an oxide capable of doping and dedoping with a lithium ion, a transition metal nitride capable of doping and dedoping with a lithium ion and a carbon material capable of doping and dedoping with a lithium ion; and
   the non-aqueous electrolyte solution for a battery according to any one of <1> to <8>.
<10> A lithium secondary battery obtained by charging and discharging the lithium secondary battery according to <9>.
<11> The non-aqueous electrolyte solution for a battery according to <1>, wherein the copper compound is selected from the group consisting of copper (II) phosphate, copper (II) sulfate, copper (II) nitrate, copper (I) acetate, copper (II) acetate, copper (II) carbonate, copper (I) cyanide, copper (II) oxalate, copper (II) citrate, copper(II) gluconate, copper (II) perchlorate, copper (II) fluoride, copper (I) chloride, copper(II) chloride, copper (II) hydroxide, tetrakis(acetonitrile)copper (I) hexafluorophosphate,copper (II) hexafluorophosphate, tetrakis(acetonitrile)copper (I) tetrafluorob orate, copper (II) tetrafluoroborate, copper (I) trifluoromethanesulfonate, copper (II)trifluoromethanesulfonate, copper (II) difluorophosphate, copper (II)monofluorophosphate, bis(ethoxide)copper (II), copper (I) acetylacetonate, and bis(acetylacetonato)copper (II).

### Advantageous Effects of Invention

One aspect of the invention provides a non-aqueous electrolyte solution for a battery, which can reduce battery resistance while containing at least one additive selected from the group consisting of lithium monofluorophosphate, lithium difluorophosphate, a lithium salt of a specified structure including a boron atom or a phosphorus atom, and a sulfonate ester compound of a specified structure, as well as a lithium secondary battery including the non-aqueous electrolyte solution for a battery.

### BRIEF DESCRIPTION OF DRAWINGS

FIG. 1 is a schematic perspective diagram illustrating one example of a laminate type battery as one example of a lithium secondary battery of an embodiment of the invention.
FIG. 2 is a schematic cross-sectional diagram in the thickness direction of a layered electrode assembly accommodated in the laminate type battery illustrated in FIG. 1.

### DESCRIPTION OF EMBODIMENTS

Hereinafter, an embodiment of the invention (hereinafter, also referred to as "the embodiment") will be described.

In the description, a numerical value range indicated by using the term "to" represents a range including the numerical values described before and after the term "to" as the minimum value and the maximum value, respectively.

In the description, when a plurality of substances are present in each component of a composition, the content of such a component in the composition means the total amount of the plurality of substances present in the composition, unless especially noted.

### [Non-Aqueous Electrolyte Solution for Battery]

A non-aqueous electrolyte solution for a battery (hereinafter, also simply referred to as "non-aqueous electrolyte solution") of the embodiment contains an additive (X) that is at least one compound selected from the group consisting of lithium monofluorophosphate, lithium difluorophosphate, a compound represented by Formula (XA) described below, a sulfonate ester compound represented by Formula (A) described below, a sulfonate ester compound represented by Formula (B) described below, a sulfonate ester compound represented by Formula (C) described below, and a sulfonate ester compound represented by Formula (D) described below, in which the content of a copper element (hereinafter, also referred to as "Cu element") with respect to the total amount of the non-aqueous electrolyte solution for a battery is from 0.001 ppm by mass to less than 5 ppm by mass.

As described above, there are known, as conventional non-aqueous electrolyte solutions for a battery (non-aqueous electrolyte solutions),
a non-aqueous electrolyte solution containing lithium fluorophosphate (for example, see Patent Literature 1),
a non-aqueous electrolyte solution containing a lithium salt including a boron atom or a phosphorus atom and having a specified structure (for example, see Patent Literature 2),
a non-aqueous solvent (namely, non-aqueous electrolyte solution) mainly containing a cyclic carbonate and an acyclic carbonate, and containing 0.1% by weight to 4% by weight of 1,3-propanesultone and/or 1,4-butanesultone (for example, see Patent Literature 3), and
a non-aqueous electrolyte solution including a compound having a β-diketone partial structure, and a complex of β-diketone with at least one metal selected from iron, nickel, copper, cobalt and zinc (for example, see Patent Literature 4).

In particular, paragraph 0048 (Table 2) in Patent Literature 4 discloses "Example Battery 15" and "Example Battery 19" as Examples in which a copper complex of acetylacetone is used as β-diketone. In such a battery, a non-aqueous electrolyte solution is used in which each of acetylacetone and the copper complex of acetylacetone is added at a concentration of 0.01 mol/dm³ to a solution (basic electrolyte solution: see paragraph 0044 in the Literature) obtained by adding lithium hexafluorophosphate at a concentration of 1.25 mol/dm³ to a mixed solvent of three volumes of ethyl methyl carbonate with one volume of ethylene carbonate. When calculation is made where the specific gravity of ethylene carbonate is 1.32, the specific gravity of ethyl methyl carbonate is 1.01, the atomic weight of a copper element is 63.5, the molecular weight of acetylacetone is 100 and the molecular weight of lithium hexafluorophosphate is 152, the non-aqueous electrolyte solution of each of "Example Battery 15" and "Example Battery 19" contains about 500 ppm by mass of the Cu element according to the calculation.

On the other hand, as a result of studies by the inventors, it has been found that battery resistance may be increased in a battery including a non-aqueous electrolyte solution for a battery, containing an additive (X) that is at least one compound selected from the group consisting of lithium monofluorophosphate, lithium difluorophosphate, a compound represented by Formula (XA) described below, a sulfonate ester compound represented by Formula (A) described below, a sulfonate ester compound represented by Formula (B) described below, a sulfonate ester compound represented by Formula (C) described below, and a sulfonate ester compound represented by Formula (D) described below.

Although not clear, the reason for the increase in battery resistance is presumed as follows.

In a battery including the non-aqueous electrolyte solution for a battery, in which the solution contains the additive (X), the Cu element contained in the negative electrode current collector may be eluted into the non-aqueous electrolyte solution by an interaction with the additive (X) in the non-aqueous electrolyte solution. That is, the Cu element may be eluted, thereby causing the surface of the negative electrode current collector to change, and causing a decomposition reaction of a non-aqueous solvent in the non-aqueous electrolyte solution to easily occur on the surface. As a result, a decomposed product of the non-aqueous solvent may deposit on the surface of the negative electrode current collector, thereby resulting in an increase in battery resistance.

The inventors have made further studies, and as a result, have found that battery resistance can be reduced by limiting the Cu element content in the non-aqueous electrolyte solution containing the additive (X) in the battery to a range of from 0.001 ppm by mass to less than 5 ppm by mass with respect to the total amount of the non-aqueous electrolyte solution. Thereby, the inventors have completed the embodiment.

That is, the non-aqueous electrolyte solution of the embodiment is a non-aqueous electrolyte solution that can suppress an increase in battery resistance while containing the additive (X).

Accordingly, the non-aqueous electrolyte solution of the embodiment is expected to have the effect of improving battery life.

In the non-aqueous electrolyte solution of the embodiment, the "Cu element content" means, in a case in which the non-aqueous electrolyte solution of the embodiment is used as an electrolyte solution of a battery, the Cu element content with respect to the total amount of the electrolyte solution in the battery.

That is, the non-aqueous electrolyte solution of the embodiment is, in other words, the non-aqueous electrolyte solution containing the additive (X), and, in a case in which the non-aqueous electrolyte solution is used as an electrolyte solution of a battery (preferably, a battery including a positive electrode, a negative electrode including a negative electrode current collector containing the Cu element, and an electrolyte solution, more preferably a lithium secondary battery of the embodiment described below.), the Cu element content with respect to the total amount of the electrolyte solution in the battery is from 0.001 ppm by mass to less than 5 ppm by mass.

For example, in a case in which the Cu element is added to a non-aqueous electrolyte solution for use in production of a battery (namely, a non-aqueous electrolyte solution before incorporation into a battery; hereinafter, also referred to as "stock non-aqueous electrolyte solution"), the non-aqueous electrolyte solution is incorporated into a battery, and the Cu element of the negative electrode current collector of the battery is partially eluted into the non-aqueous electrolyte solution, the "Cu element content" is the total amount of the Cu element added to the stock non-aqueous electrolyte solution and the amount of the Cu element eluted from the negative electrode current collector into the non-aqueous electrolyte solution.

As described above, in the description, the Cu element content means the Cu element content in the non-aqueous electrolyte solution in the battery, unless particularly noted.

On the other hand, in the description, the content of each component other than the Cu element in the non-aqueous electrolyte solution means the content of each component in the stock non-aqueous electrolyte solution, unless particularly noted.

### <Additive (X)>

The additive (X) in the embodiment is at least one compound selected from the group consisting of lithium monofluorophosphate, lithium difluorophosphate, a compound represented by the following Formula (XA), a sulfonate ester compound represented by the following Formula (A), a sulfonate ester compound represented by the following Formula (B), a sulfonate ester compound represented by the following Formula (C), and a sulfonate ester compound represented by the following Formula (D), as described above.

In the description, lithium monofluorophosphate and lithium difluorophosphate may be collectively called as "lithium fluorophosphate".

The content of the additive (X) in the non-aqueous electrolyte solution of the embodiment is not particularly limited.

From the viewpoint that the effect of the embodiment is more effectively exerted, the content of the additive (X) (the total content in a case of two kinds) is preferably from 0.001% by mass to 5% by mass, more preferably from 0.05% by mass to 5% by mass.

The additive (X), when serves as a non-aqueous electrolyte solution and is actually subjected to production of a secondary battery, may be changed in the content therein even in a case in which the battery is disassembled and the non-aqueous electrolyte solution is taken out again. Therefore, in a case in which a predetermined amount of the additive (X) is contained in the non-aqueous electrolyte solution to provide a battery, it can be believed that the additive (X) is contained in the non-aqueous electrolyte solution, as long as at least the additive (X) can be detected in the non-aqueous electrolyte solution extracted from the battery. Much the same is true on other additives described below.

In the description, both "the content of the additive" and "the amount of addition of the additive" mean the content of the additive with respect to the total amount of the non-aqueous electrolyte solution.

Hereinafter, each of the compounds that can be selected as the additive (X) will be described in more detail.

### (Lithium Fluorophosphate)

The non-aqueous electrolyte solution of the embodiment can contain at least one of lithium monofluorophosphate (LiPO₃F) or lithium difluorophosphate (LiPO₂F₂) (namely, lithium fluorophosphate), as the additive (X).

In a case in which the non-aqueous electrolyte solution of the embodiment contains lithium fluorophosphate as the additive (X), the additive (X) preferably includes lithium difluorophosphate.

### (Compound Represented by Formula (XA))

The non-aqueous electrolyte solution of the embodiment can contain a compound represented by Formula (XA), as the additive (X).

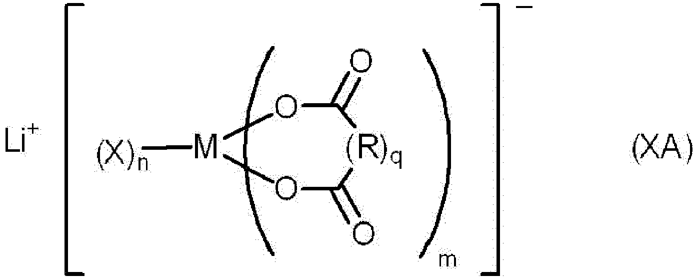

In Formula (XA), M represents a boron atom or a phosphorus atom, X represents a halogen atom, R represents an alkylene group having from 1 to 10 carbon atoms, a halogenated alkylene group having from 1 to 10 carbon atoms, an arylene group having from 6 to 20 carbon atoms, or a halogenated arylene group having from 6 to 20 carbon atoms (such groups may each include a substituent or a hetero atom in a structure thereof.), m represents an integer from 1 to 3, n represents an integer from 0 to 4, and q represents 0 or 1.

Specific examples of the halogen atom represented by X in Formula (XA) include a fluorine atom, a chlorine atom, a bromine atom, and an iodine atom, and a fluorine atom is particularly preferable.

In Formula (XA), R represents an alkylene group having from 1 to 10 carbon atoms, a halogenated alkylene group having from 1 to 10 carbon atoms, an arylene group having from 6 to 20 carbon atoms, or a halogenated arylene group having from 6 to 20 carbon atoms.

Such groups represented by R (namely, an alkylene group having from 1 to 10 carbon atoms, a halogenated alkylene group having from 1 to 10 carbon atoms, an arylene group having from 6 to 20 carbon atoms, and a halogenated arylene group having from 6 to 20 carbon atoms) may each include a substituent or a hetero atom in the structure.

Specifically, such groups may each include, instead of a hydrogen atom thereof, a halogen atom, an acyclic or cyclic alkyl group, an aryl group, an alkenyl group, an alkoxy group, an aryloxy group, a sulfonyl group, an amino group, a cyano group, a carbonyl group, an acyl group, an amide group, or a hydroxyl group, as a substituent.

Such groups may each have a structure into which a nitrogen atom, a sulfur atom, or an oxygen atom is introduced as a hetero atom, instead of a carbon element of each of such groups.

In a case in which q represents 1 and m represents from 2 to 4, m of R's may be each bound. Such examples can include a ligand such as ethylenediaminetetraacetic acid.

The number of carbon atoms in the alkylene group having from 1 to 10 carbon atoms as R is preferably from 1 to 6, more preferably from 1 to 3, particularly preferably 1. An alkylene group where the number of carbon atoms is 1 corresponds to a methylene group (namely, -CH₂-group).

The halogenated alkylene group having from 1 to 10 carbon atoms as R means a group obtained by replacing at least one hydrogen atom included in the alkylene group having from 1 to 10 carbon atoms with a halogen atom (for example, a fluorine atom, a chlorine atom, a bromine atom, or an iodine atom, preferably a fluorine atom).

The number of carbon atoms in the halogenated alkylene group having from 1 to 10 carbon atoms is preferably from 1 to 6, more preferably from 1 to 3, particularly preferably 1.

The number of carbon atoms in the arylene group having from 6 to 20 carbon atoms as R is preferably from 6 to 12.

The halogenated arylene group having from 6 to 20 carbon atoms as R means a group obtained by replacing at least one hydrogen atom included in the arylene group having from 6 to 20 carbon atoms with a halogen atom (for example, a fluorine atom, a chlorine atom, a bromine atom, or an iodine atom, preferably a fluorine atom).

The number of carbon atoms in the halogenated arylene group having from 6 to 20 carbon atoms is preferably from 6 to 12.

R preferably represents an alkylene group having from 1 to 10 carbon atoms, more preferably an alkylene group having from 1 to 6 carbon atoms, still more preferably an alkylene group having from 1 to 3 carbon atoms, particularly preferably an alkylene group having one carbon atom (namely, methylene group).

In Formula (XA), m represents an integer from 1 to 3, n represents an integer from 0 to 4, and q represents 0 or 1.

A compound where q in Formula (XA) represents 0 specifically corresponds to an oxalato compound represented by the following Formula (XA2).

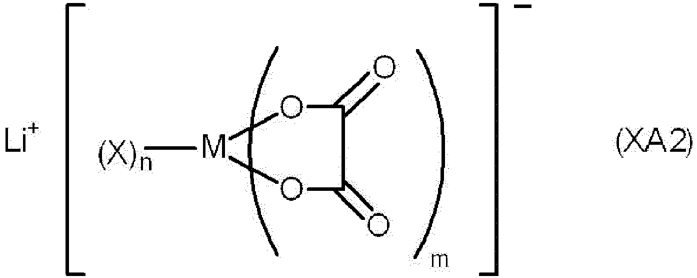

In Formula (XA2), M, X, m, and n are the same as M, X, m, and n in Formula (XA), respectively.

Specific examples of the compound represented by Formula (XA) (encompassing a case in which the compound is the compound represented by Formula (XA2), the same shall apply hereinafter.) include
oxalato compounds such as
lithium difluorobis(oxalato)phosphate,
lithium tetrafluoro(oxalato)phosphate,
lithium tris(oxalato)phosphate,
lithium difluoro(oxalato)borate, and
lithium bis(oxalato)borate (such compounds are each a compound where q represents 0); and malonate compounds such as
lithium difluorobis(malonate)phosphate,
lithium tetrafluoro(malonate)phosphate,
lithium tris(malonate)phosphate,
lithium difluoro(malonate)borate, and
lithium bis(malonate)borate (such compounds are each a compound where q represents 1 and R represents a methylene group).

The compound represented by Formula (XA) preferably includes at least one selected from the group consisting of lithium difluorobis(oxalato)phosphate, lithium tetrafluoro(oxalato)phosphate, lithium difluoro(oxalato)borate, and lithium bis(oxalato)borate.

### (Sulfonate Ester Compound Represented by Formula (A))

The non-aqueous electrolyte solution of the embodiment can contain a sulfonate ester compound represented by Formula (A), as the additive (X).

The sulfonate ester compound represented by Formula (A) corresponds to an acyclic sulfonate ester compound, as shown below.

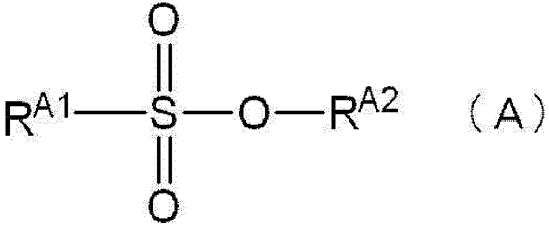

In Formula (A), R^{A1} and R^{A2} each independently represent a straight or branched aliphatic hydrocarbon group having from 1 to 12 carbon atoms, an aryl group having from 6 to 12 carbon atoms, or a heterocyclic group having from 6 to 12 carbon atoms. Such groups may each be substituted with a halogen atom. The aliphatic hydrocarbon group may be substituted with at least one of an alkoxy group, an alkenyloxy group or an alkynyloxy group.

The hetero atom included in the heterocyclic group is preferably an oxygen atom or a nitrogen atom.

Specific examples of the sulfonate ester compound represented by Formula (A) include sulfonate ester compounds represented by Formulae (A-1) to (A-3).

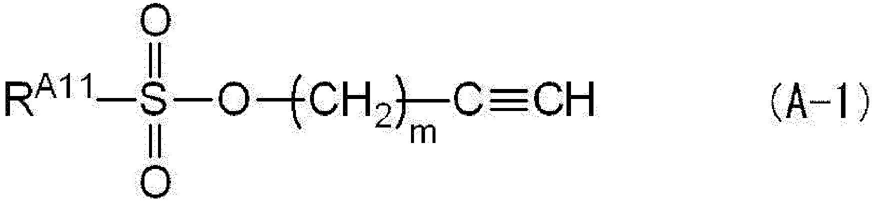

In Formula (A-1), R^{A11} represents an alkyl group having from 1 to 12 carbon atoms, a halogenated alkyl group having from 1 to 12 carbon atoms, or an aryl group having from 6 to 12 carbon atoms. In Formula (A-1), m represents 1 or 2.

In Formula (A-1), R^{A11} preferably represents an alkyl group having from 1 to 6 carbon atoms, a halogenated alkyl group having from 1 to 6 carbon atoms, or an aryl group having from 6 to 12 carbon atoms.

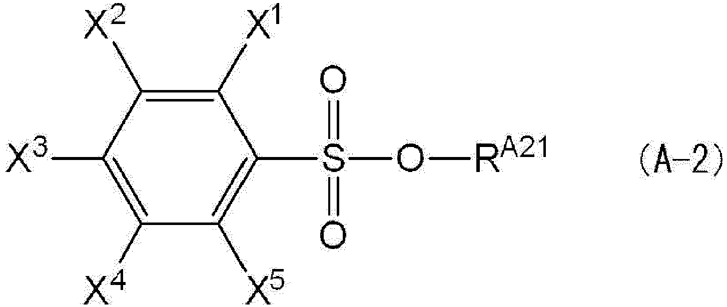

In Formula (A-2), X¹ to X⁵ each independently represent a fluorine atom or a hydrogen atom.

In Formula (A-2), R^{A21} represents an alkynyl group having from 3 to 6 carbon atoms or an aryl group having from 6 to 12 carbon atoms. Examples of the alkynyl group having from 3 to 6 carbon atoms include a 2-propynyl group (having the same meaning as a propargyl group), a 2-butynyl group, a 3-butynyl group, a 4-pentynyl group, a 5-hexynyl group, a 1-methyl-2-propynyl group, a 1-methyl-2-butynyl group, and 1,1-dimethyl-2-propynyl. Examples of the aryl group include a phenyl group and a biphenyl group.

In a case in which the sulfonate ester compound represented by Formula (A-2) is 2-fluorobenzenesulfonate ester (specifically, X¹ represents a fluorine atom, and all of X², X³, X⁴, and X⁵ represent a hydrogen atom), specific examples of the sulfonate ester compound include propargyl 2-fluorobenzenesulfonate, 2-butynyl 2-fluorobenzenesulfonate, 3-butynyl 2-fluorobenzenesulfonate, 4-pentynyl 2-fluorobenzenesulfonate, 5-hexynyl 2-fluorobenzenesulfonate, 1-methyl-2-propynyl 2-fluorobenzenesulfonate, 1-methyl-2-butynyl 2-fluorobenzenesulfonate, 1,1-dimethyl-2-propynyl 2-fluorobenzenesulfonate, phenyl 2-fluorobenzenesulfonate, and biphenyl 2-fluorobenzenesulfonate.

In a case in which the sulfonate ester compound represented by Formula (A-2) is 3-fluorobenzenesulfonate ester, 4-fluorobenzenesulfonate ester, 2,4-difluorobenzenesulfonate ester, 2,6-difluorobenzenesulfonate ester, 2,4,6-trifluorobenzenesulfonate ester, or 2,3,4,5,6-pentafluorobenzenesulfonate ester, specific examples of such sulfonate ester compounds include respective sulfonate ester compounds corresponding to the specific examples of the 2-fluorobenzenesulfonate ester.

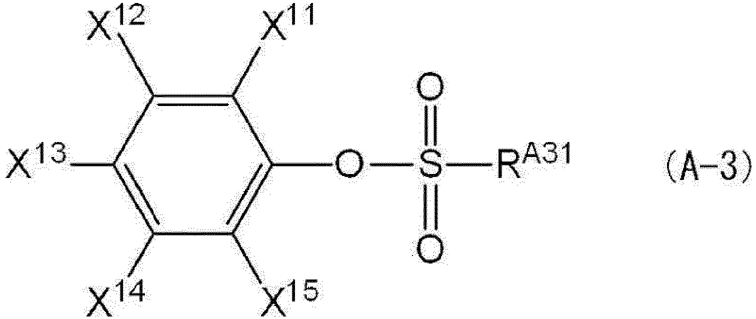

In Formula (A-3), X¹¹ to X¹⁵ each independently represent a fluorine atom or a hydrogen atom, 2 to 4 of them each represent a fluorine atom, and R^{A31} represents a straight or branched alkyl group having from 1 to 6 carbon atoms, a straight or branched alkyl group having from 1 to 6 carbon atoms, which is substituted with at least one halogen atom, or an aryl group having from 6 to 9 carbon atoms.

Examples of the straight or branched alkyl group having from 1 to 6 carbon atoms as R^{A31} in Formula (A-3) include a methyl group, an ethyl group, a n-propyl group, an isopropyl group, a n-butyl group, an isobutyl group, a sec-butyl group, a tert-butyl group, a n-pentyl group, a neopentyl group, a sec-pentyl group, a tert-pentyl group, a n-hexyl group, and a 2-hexyl group.

Examples of the straight or branched alkyl group having from 1 to 6 carbon atoms, which is substituted with at least one halogen atom, as R^{A31} in Formula (A-3) include a substituent formed by substituting the straight or branched alkyl group having from 1 to 6 carbon atoms with at least one halogen atom, and specific examples thereof include a trifluoromethyl group and a 2,2,2-trifluoroethyl group.

Examples of the aryl group having from 6 to 9 carbon atoms as R^{A31} in Formula (A-3) include a phenyl group, a tosyl group, and mesityl.

Specific examples of the sulfonate ester compound represented by Formula (A-3) in which R^{A31} represents a methyl group include 2,3-difluorophenyl methanesulfonate, 2,4-difluorophenyl methanesulfonate, 2,5-difluorophenyl methanesulfonate, 2,6-difluorophenyl methanesulfonate, 3,4-difluorophenyl methanesulfonate, 3,5-difluorophenyl methanesulfonate, 2,3,4-trifluorophenyl methanesulfonate, 2,3,5-trifluorophenyl methanesulfonate, 2,3,6-trifluorophenyl methanesulfonate, 2,4,5-trifluorophenyl methanesulfonate, 2,4,6-trifluorophenyl methanesulfonate, 3,4,5-trifluorophenyl methanesulfonate, and 2,3,5,6-tetrafluorophenyl methanesulfonate.

Specific examples of the sulfonate ester compound represented by Formula (A-3) in which R^{A31} represents an ethyl group, n-propyl group, an isopropyl group, a n-butyl group, an isobutyl group, a sec-butyl group, a tert-butyl group, a n-pentyl group, a neopentyl group, a sec-pentyl group, a tert-pentyl group, a n-hexyl group, a 2-hexyl group, or the like include respective sulfonate ester compounds corresponding to the specific examples of the sulfonate ester compound represented by Formula (A-3) in which R^{A31} represents a methyl group.

### (Sulfonate Ester Compound Represented by Formula (B))

The non-aqueous electrolyte solution of the embodiment can contain a sulfonate ester compound represented by Formula (B), as the additive (X).

The sulfonate ester compound represented by Formula (B) is a saturated cyclic sulfonate ester compound (namely, saturated sultone compound), as shown below.

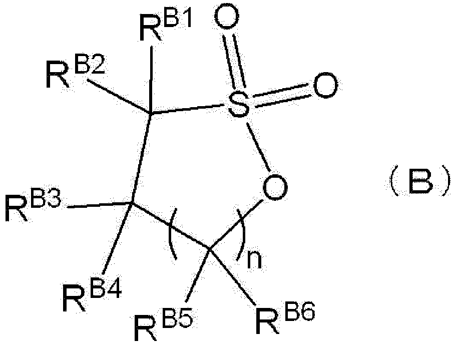

In Formula (B), R^{B1} to R^{B6} each independently represent a hydrogen atom, a halogen atom, or an alkyl group having from 1 to 6 carbon atoms that may be substituted with a halogen atom. In Formula (B), n represents an integer from 0 to 3.

In Formula (B), specific examples of the "halogen atom" include a fluorine atom, a chlorine atom, a bromine atom, and an iodine atom.

The halogen atom is preferably a fluorine atom.

In Formula (B), the "alkyl group having from 1 to 6 carbon atoms" refers to a straight or branched alkyl group having from 1 to 6 carbon atoms, and specific examples thereof include a methyl group, an ethyl group, a propyl group, an isopropyl group, a butyl group, an isobutyl group, a sec-butyl group, a tert-butyl group, a pentyl group, a 2-methylbutyl group, a 1-methylpentyl group, a neopentyl group, a 1-ethylpropyl group, a hexyl group, and a 3,3-dimethylbutyl group.

The alkyl group having from 1 to 6 carbon atoms is more preferably an alkyl group having from 1 to 3 carbon atoms.

In Formula (B), the alkyl group having from 1 to 6 carbon atoms that is substituted with a halogen atom (namely, a halogenated alkyl group having from 1 to 6 carbon atoms) is a straight or branched halogenated alkyl group having from 1 to 6 carbon atoms, and specific examples thereof include a fluoromethyl group, a difluoromethyl group, a trifluoromethyl group, a 2,2,2-trifluoroethyl group, a perfluoroethyl group, a perfluoropropyl group, a perfluorobutyl group, a perfluoropentyl group, a perfluorohexyl group, a perfluoroisopropyl group, a perfluoroisobutyl group, a chloromethyl group, a chloroethyl group, a chloropropyl group, a bromomethyl group, a bromoethyl group, a bromopropyl group, an iodomethyl group, an iodoethyl group, and an iodopropyl group.

The halogenated alkyl group having from 1 to 6 carbon atoms is more preferably a halogenated alkyl group having from 1 to 3 carbon atoms.

Examples of a preferable combination of R^{B1} to R^{B6} and n include a combination in which R^{B1} to R^{B6} each independently represent a hydrogen atom, a fluorine atom, or an alkyl group having 1 or 2 carbon atoms that may be substituted with a fluorine atom, and n represents from 1 to 3.

In Formula (B), n preferably represents from 1 to 3, more preferably from 1 to 2, particularly preferably 1.

### (Sulfonate Ester Compound Represented by Formula (C))

The non-aqueous electrolyte solution of the embodiment can contain a sulfonate ester compound represented by Formula (C), as the additive (X).

The sulfonate ester compound represented by Formula (C) is an unsaturated cyclic sulfonate ester compound (namely, unsaturated sultone compound), as shown below.

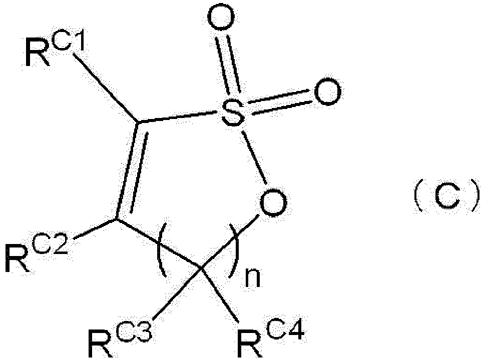

In Formula (C), R^{C1} to R^{C4} each independently represent a hydrogen atom, a halogen atom, or an alkyl group having from 1 to 6 carbon atoms that may be substituted with a halogen atom. In Formula (C), n represents an integer from 0 to 3.

In Formula (C), the "halogen atom" has the same meaning as the "halogen atom" in Formula (B), and specific examples and a preferable definition of the "halogen atom" in Formula (C) are the same as the specific examples and the preferable definition of that in Formula (B).

In Formula (C), the "alkyl group having from 1 to 6 carbon atoms" has the same meaning as the "alkyl group having from 1 to 6 carbon atoms" in Formula (B), and specific examples of the "alkyl group having from 1 to 6 carbon atoms" in Formula (C) are the same as the specific examples of that in Formula (B).

In Formula (C), the alkyl group having from 1 to 6 carbon atoms that is substituted with a halogen atom, has the same meaning as the alkyl group having from 1 to 6 carbon atoms that is substituted with a halogen atom, in Formula (B), and specific examples thereof are also the same as those in Formula (B).

Examples of a preferable combination of R^{C1} to R^{C4} and n include a combination in which R^{C1} to R^{C4} each independently represent a hydrogen atom, a fluorine atom, or an alkyl group having 1 or 2 carbon atoms that may be substituted with a fluorine atom, and n represents from 1 to 3.

In Formula (C), n preferably represents from 1 to 3, more preferably from 1 to 2, particularly preferably 1.

Specific examples of the sulfonate ester compound represented by Formula (C) include the following compounds.

Herein, the sulfonate ester compound represented by Formula (C) is not limited to the following compounds.

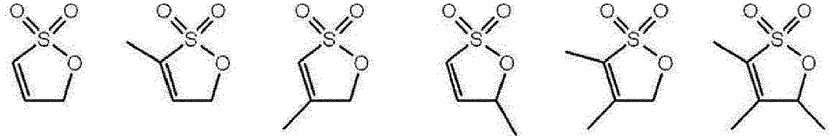

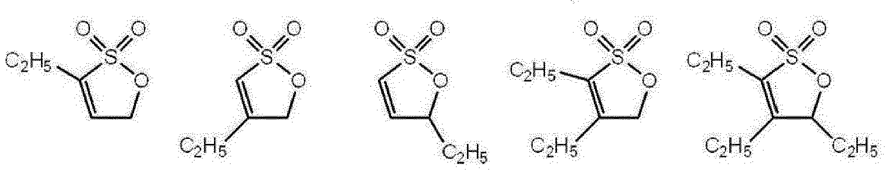

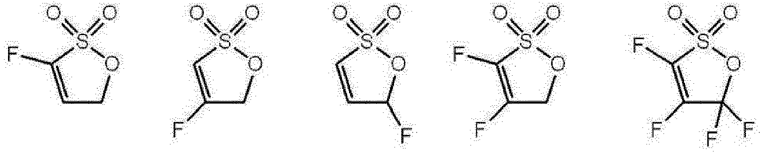

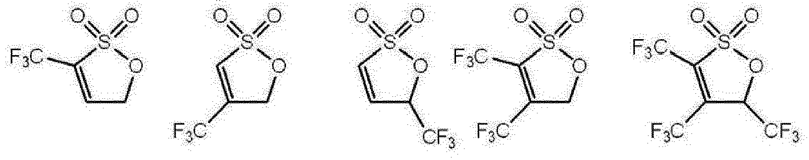

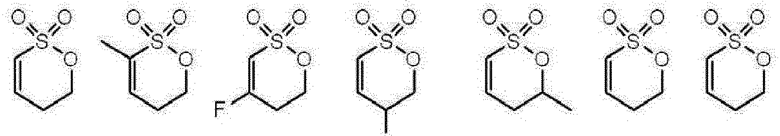

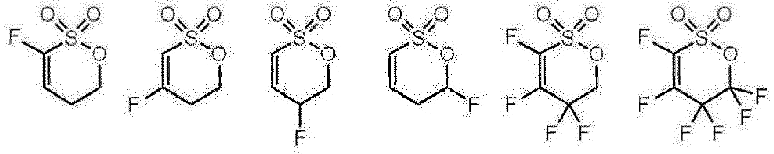

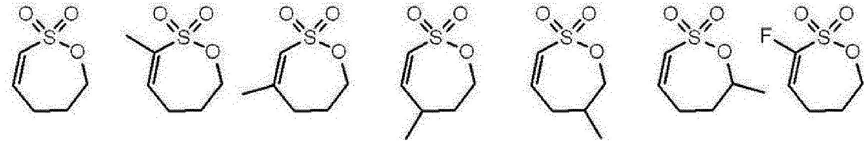

### (Sulfonate Ester Compound Represented by Formula (D))

The non-aqueous electrolyte solution of the embodiment can contain a sulfonate ester compound represented by Formula (D), as the additive (X).

The sulfonate ester compound represented by Formula (D) is a disulfonate ester compound, as shown below.

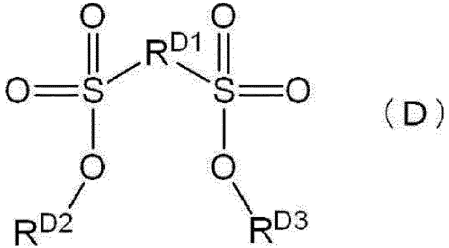

In Formula (D), R^{D1} represents an aliphatic hydrocarbon group having from 1 to 10 carbon atoms, or a halogenated alkylene group having from 1 to 3 carbon atoms.

R^{D2} and R^{D3} each independently represent an alkyl group having from 1 to 6 carbon atoms, or a phenyl group, or R^{D2} and R^{D3} taken together represent an alkylene group having from 1 to 10 carbon atoms, or a 1,2-phenylene group that may be substituted with a halogen atom, an alkyl group having from 1 to 12 carbon atoms, or a cyano group.

In Formula (D), the aliphatic hydrocarbon group having from 1 to 10 carbon atoms as R^{D1} is a straight or branched aliphatic hydrocarbon group having from 1 to 10 carbon atoms (preferably, a straight or branched alkylene group having from 1 to 10 carbon atoms).

Examples of the aliphatic hydrocarbon group having from 1 to 10 carbon atoms include a methylene group (-CH₂- group), a dimethylene group (-(CH₂)₂- group), a trimethylene group (-(CH₂)₃- group), a tetramethylene group (-(CH₂)₄- group), a pentamethylene group (-(CH₂)₅-group), a hexamethylene group (-(CH₂)₆- group), a heptamethylene group (-(CH₂)₇- group), an octamethylene group (-(CH₂)₈- group), a nonamethylene group (-(CH₂)₉- group), and a decamethylene group (-(CH₂)₁₀- group).

Examples of the aliphatic hydrocarbon group having from 1 to 10 carbon atoms include substituted methylene groups such as a methylmethylene group (-CH(CH₃)- group), a dimethylmethylene group (-C(CH₃)₂- group), a vinylmethylene group, a divinylmethylene group, an allylmethylene group, and a diallylmethylene group.

The aliphatic hydrocarbon group having from 1 to 10 carbon atoms is more preferably an alkylene group having from 1 to 3 carbon atoms, still more preferably a methylene group, a dimethylene group, a trimethylene group, or a dimethylmethylene group, still more preferably a methylene group or a dimethylene group.

In Formula (D), the halogenated alkylene group having from 1 to 3 carbon atoms as R^{D1} is a straight or branched halogenated alkylene group having from 1 to 3 carbon atoms, and examples thereof include a fluoromethylene group (-CHF- group), a difluoromethylene group (-CF₂- group), and a tetrafluorodimethylene group (-CF₂CF₂- group).

In Formula (D), R^{D2} and R^{D3} each independently represent an alkyl group having from 1 to 6 carbon atoms, or a phenyl group, or R^{D2} and R^{D3} taken together represent an alkylene group having from 1 to 10 carbon atoms, or a 1,2-phenylene group that may be substituted with a halogen atom, an alkyl group having from 1 to 12 carbon atoms, or a cyano group.

In Formula (D), the alkyl group having from 1 to 6 carbon atoms as each of R^{D2} and R^{D3} is a straight or branched alkyl group having from 1 to 6 carbon atoms, and specific examples thereof include a methyl group, an ethyl group, a propyl group, an isopropyl group, a butyl group, an isobutyl group, a sec-butyl group, a tert-butyl group, a pentyl group, a 2-methylbutyl group, a 1-methylpentyl group, a neopentyl group, a 1-ethylpropyl group, a hexyl group, and a 3,3-dimethylbutyl group.

In Formula (D), specific examples of the halogen atom as each of R^{D2} and R^{D3} include a fluorine atom, a chlorine atom, a bromine atom, and an iodine atom.

In Formula (D), in a case in which R^{D2} and R^{D3} taken together represent an alkylene group having from 1 to 10 carbon atoms, the alkylene group having from 1 to 10 carbon atoms is a straight or branched alkylene group having from 1 to 10 carbon atoms.

In a case in which R^{D2} and R^{D3} taken together represent an alkylene group having from 1 to 10 carbon atoms, examples and a preferable definition of the alkylene group having from 1 to 10 carbon atoms are the same as the examples and the preferable definition of the aliphatic hydrocarbon group having from 1 to 10 carbon atoms as R^{D1}.

In Formula (D), the alkyl group having from 1 to 12 carbon atoms as each of R^{D2} and R^{D3} is a straight or branched alkyl group having from 1 to 12 carbon atoms, and examples thereof include a methyl group, an ethyl group, a propyl group, an isopropyl group, a butyl group, an isobutyl group, a sec-butyl group, a tert-butyl group, a pentyl group, a 2-methylbutyl group, a 1-methylpentyl group, a neopentyl group, a 1-ethylpropyl group, a hexyl group, a 3,3-dimethylbutyl group, a heptyl group, an octyl group, a nonyl group, a decyl group, an undecanyl group, and a dodecanyl group.

The alkyl group having from 1 to 12 carbon atoms is preferably an alkyl group having from 1 to 6 carbon atoms, more preferably an alkyl group having from 1 to 4, particularly preferably an alkyl group having from 1 to 3 carbon atoms.

A compound in which R^{D2} and R^{D3} each independently represent an alkyl group having from 1 to 6 carbon atoms, or a phenyl group, as the sulfonate ester compound represented by Formula (D), is a compound represented by the following Formula (D-1).

A compound in which R^{D2} and R^{D3} taken together represent an alkylene group having from 1 to 10 carbon atoms, as the sulfonate ester compound represented by Formula (D), is a compound represented by the following Formula (D-2).

A compound in which R^{D2} and R^{D3} taken together represent a 1,2-phenylene group that may be substituted with a halogen atom, an alkyl group having from 1 to 12 carbon atoms, or a cyano group, as the sulfonate ester compound represented by Formula (D), is a compound represented by the following Formula (D-3).

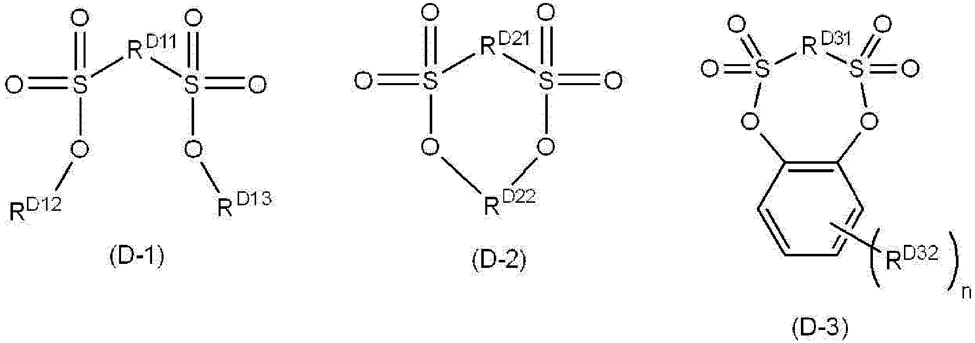

In Formulae (D-1) to (D-3), R^{D11}, R^{D21} , and R^{D31} are each the same as R^{D1} in Formula (D).

In Formula (D-1), R^{D12} and R^{D13} each independently represent an alkyl group having from 1 to 6 carbon atoms, or a phenyl group.

In Formula (D-2), R^{D22} represents an alkylene group having from 1 to 10 carbon atoms.

In Formula (D-3), R^{D32} represents a halogen atom, an alkyl group having from 1 to 12 carbon atoms, or a cyano group, and n represents an integer from 0 to 4 (preferably 0, 1 or 2, particularly preferably 0).

### <Cu Element>

In a case in which the non-aqueous electrolyte solution of the embodiment is used as an electrolyte solution of a battery, the Cu element content with respect to the total amount of the electrolyte solution in the battery is from 0.001 ppm by mass to less than 5 ppm by mass.

Herein, the "Cu element content with respect to the total amount of the electrolyte solution" means the amount of the Cu element dissolved in the non-aqueous electrolyte solution.

In the embodiment, the Cu element is inhibited from being eluted from the negative electrode current collector of the battery, and as a result, the Cu element content in the non-aqueous electrolyte solution in the battery is limited to less than 5 ppm by mass, thereby resulting in a reduction in battery resistance. In a case in which the Cu element content is less than 5 ppm by mass, the effect of suppressing formation of dendrite is expected.

The lower limit (0.001 ppm by mass) of the Cu element content corresponds to the lower limit in terms of productivity (production adequacy) of the non-aqueous electrolyte solution or the battery.

From the viewpoint of a reduction in battery resistance, the Cu element content with respect to the total amount of the electrolyte solution in the battery is preferably 4 ppm by mass or less, more preferably 3 ppm by mass or less, still more preferably 2 ppm by mass or less, particularly preferably 1 ppm by mass or less.

From the viewpoint of productivity (production adequacy) of the non-aqueous electrolyte solution or the battery, the Cu element content with respect to the total amount of the electrolyte solution in the battery is preferably 0.01 ppm by mass or more, more preferably 0.1 ppm by mass or more, still more preferably 0.5 ppm by mass or more.

In the description, the Cu element content in the non-aqueous electrolyte solution means a value measured by inductively coupled plasma mass spectrometry.

In the embodiment, the Cu element content in the non-aqueous electrolyte solution in the battery may be consequently limited to a range of from 0.001 ppm by mass to less than 5 ppm by mass, and a specific procedure for limiting the Cu element content the range is not particularly limited. In fact, any procedure may be used as long as the Cu element is consequently inhibited from being eluted from the negative electrode current collector and the Cu element content in the non-aqueous electrolyte solution in the battery is consequently limited to a range of from 0.001 ppm by mass to less than 5 ppm by mass.

A trace of the Cu element is contained in the stock non-aqueous electrolyte solution in advance such that the Cu element can be inhibited from being eluted from the negative electrode current collector and the Cu element content in the electrolyte solution can be kept within a range of from 0.001 ppm by mass to less than 5 ppm by mass. The Cu element content with respect to the total amount of the stock non-aqueous electrolyte solution is from 0.001 ppm by mass to less than 5 ppm by mass.

The Cu element content in the stock non-aqueous electrolyte solution is more preferably 4 ppm by mass or less, still more preferably 3 ppm by mass or less, still more preferably 2 ppm by mass or less, still more preferably 1 ppm by mass or less.

The Cu element content in the stock non-aqueous electrolyte solution is preferably 0.01 ppm by mass or more, more preferably 0.1 ppm by mass or more, still more preferably 0.2 ppm by mass or more, with respect to the total amount of the stock non-aqueous electrolyte solution. The aspect in which a trace of the Cu element is contained in the stock non-aqueous electrolyte solution in advance is preferably an aspect in which a copper compound described

below (hereinafter, also referred to as "Cu compound") is contained in the stock non-aqueous electrolyte solution in advance.

### <Cu Compound>

The non-aqueous electrolyte solution of the embodiment preferably contains a Cu compound as the compound including the Cu element. That is, the non-aqueous electrolyte solution of the embodiment preferably contains a Cu compound, and the Cu element content is preferably from 0.001 ppm by mass to less than 5 ppm by mass with respect to the total amount of the non-aqueous electrolyte solution.

The Cu compound is preferably an ionic compound where the oxidation number of the Cu element is +1 or +2.

Examples of the Cu compound include copper (II) phosphate, copper (II) sulfate, copper (II) nitrate, copper (I) acetate, copper (II) acetate, copper (II) carbonate, copper (I) cyanide, copper (II) oxalate, copper (II) citrate, copper (II) gluconate, copper (II) perchlorate, copper (II) fluoride, copper (I) chloride, copper (II) chloride, copper (II) hydroxide, tetrakis(acetonitrile)copper (I) hexafluorophosphate, copper (II) hexafluorophosphate, tetrakis(acetonitrile)copper (I) tetrafluoroborate, copper (II) tetrafluoroborate, copper (I) trifluoromethanesulfonate, copper (II) trifluoromethanesulfonate, copper (II) difluorophosphate, copper (II) monofluorophosphate, bis(ethoxide)copper (II), copper (I) acetylacetonate, and bis(acetylacetonato)copper (II).

In particular, tetrakis(acetonitrile)copper (I) hexafluorophosphate, tetrakis(acetonitrile)copper (I) tetrafluoroborate, copper (II) trifluoromethanesulfonate, or bis(acetylacetonato)copper (II) is preferable from the viewpoints of availability and ease of handling.

In a case in which the non-aqueous electrolyte solution of the embodiment contains a Cu compound, the Cu compound may be contained singly or in combination of two or more kinds.

In a case in which the non-aqueous electrolyte solution of the embodiment contains a Cu compound, the content of the Cu compound (the total content in a case of two kinds, the same shall apply hereinafter.) is not particularly limited. From the viewpoint that the effect of the embodiment is more effectively exerted, the content of the Cu compound is preferably 0.001 ppm by mass to 15 ppm by mass, more preferably 0.05 ppm by mass to 15 ppm by mass, with respect to the total amount of the non-aqueous electrolyte solution.

The content of the Cu compound is more preferably 10 ppm by mass or less, still more preferably 5.0 ppm by mass or less.

The content of the Cu compound is more preferably 0.01 ppm by mass or more, still more preferably 0.1 ppm by mass or more, particularly preferably 0.5 ppm by mass or more.

### <Other Additive>

The non-aqueous electrolyte solution of the embodiment may contain any additive other than the above.

Examples of such other additive include a carbonate compound having a carbon-carbon unsaturated bond; a carbonate compound substituted with a fluorine atom; a fluorophosphoric acid compound other than lithium monofluorophosphate and lithium difluorophosphate; and a cyclic sulfate ester compound.

In a case in which the non-aqueous electrolyte solution of the embodiment contains other additive, such other additive may be contained singly or in combination of two or more kinds.

Such other additive is preferably a cyclic sulfate ester compound, particularly preferably a cyclic sulfate ester compound represented by Formula (I) described below (hereinafter, also referred to as "compound represented by Formula (I)").

### (Carbonate Compound Having Carbon-Carbon Unsaturated Bond)

Examples of the carbonate compound having a carbon-carbon unsaturated bond include acyclic carbonate compounds such as methyl vinyl carbonate, ethyl vinyl carbonate, divinyl carbonate, methyl propynyl carbonate, ethyl propynyl carbonate, dipropynyl carbonate, methyl phenyl carbonate, ethyl phenyl carbonate and diphenyl carbonate; and cyclic carbonate compounds such as vinylene carbonate, methylvinylene carbonate, 4,4-dimethylvinylene carbonate, 4,5-dimethylvinylene carbonate, vinyl ethylene carbonate, 4,4-divinylethylene carbonate, 4,5-divinylethylene carbonate, ethynylethylene carbonate, 4,4-diethynylethylene carbonate, 4,5-diethynylethylene carbonate, propynyl ethylene carbonate, 4,4-dipropynyl ethylene carbonate and 4,5-dipropynyl ethylene carbonate. In particular, methyl phenyl carbonate, ethyl phenyl carbonate, diphenyl carbonate, vinylene carbonate, vinylethylene carbonate, 4,4-divinylethylene carbonate, and 4,5-divinylethylene carbonate are preferable, and vinylene carbonate and vinylethylene carbonate are more preferable.

### (Carbonate Compound Having Fluorine Atom)

Examples of the carbonate compound having a fluorine atom include acyclic carbonate compounds such as methyl trifluoromethyl carbonate, ethyl trifluoromethyl carbonate, bis(trifluoromethyl)carbonate, methyl(2,2,2-trifluoroethyl)carbonate, ethyl(2,2,2-trifluoroethyl)carbonate and bis(2,2,2-trifluoroethyl)carbonate; and cyclic carbonate compounds such as 4-fluoroethylene carbonate, 4,4-difluoroethylene carbonate, 4,5-difluoroethylene carbonate and 4-trifluoromethylethylene carbonate. In particular, 4-fluoroethylene carbonate, 4,4-difluoroethylene carbonate, and 4,5-difluoroethylene carbonate are preferable.

### (Fluorophosphoric Acid Compound)

Examples of the fluorophosphoric acid compound other than lithium monofluorophosphate and lithium difluorophosphate include difluorophosphoric acid, monofluorophosphoric acid, methyl difluorophosphate, ethyl difluorophosphate, dimethyl fluorophosphate, and diethyl fluorophosphate. Examples also include a difluorophosphoric acid salt other than lithium difluorophosphate above, a monofluorophosphoric acid salt other than lithium monofluorophosphate above, and a fluorosulfonic acid salt.

### (Cyclic Sulfate Ester Compound)

The cyclic sulfate ester compound is preferably a sulfate ester compound represented by the following Formula (I) (hereinafter, also referred to as the "compound represented by Formula (I)").

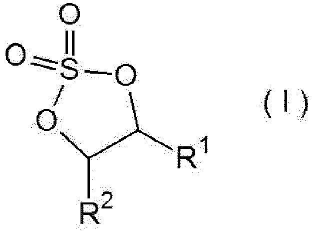

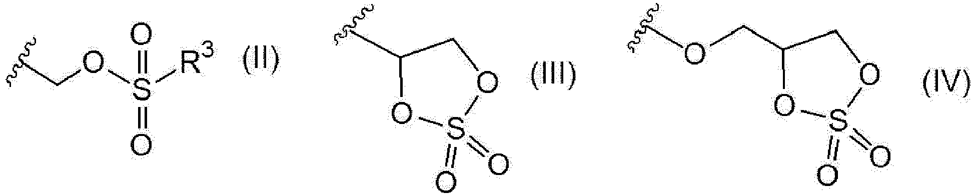

In Formula (I), R¹ and R² each independently represent a hydrogen atom, an alkyl group having from 1 to 6 carbon atoms, a phenyl group, a group represented by Formula (II), or a group represented by Formula (III), or R¹ and R² taken together represent a group that forms a benzene ring or a cyclohexyl ring together with a carbon atom bound to R¹ and a carbon atom bound to R².

In Formula (II), R³ represents a halogen atom, an alkyl group having from 1 to 6 carbon atoms, a halogenated alkyl group having from 1 to 6 carbon atoms, an alkoxy group having from 1 to 6 carbon atoms, or a group represented by Formula (IV). Each wavy line in Formula (II), Formula (III), and Formula (IV) represents a bonding position.

In a case in which the cyclic sulfate ester compound represented by Formula (I) includes two groups represented by Formula (II), the two groups represented by Formula (II) may be the same as or different from each other.

In Formula (II), specific examples of the "halogen atom" include a fluorine atom, a chlorine atom, a bromine atom, and an iodine atom.

The halogen atom is preferably a fluorine atom.

In Formulae (I) and (II), the "alkyl group having from 1 to 6 carbon atoms" refers to a straight or branched alkyl group having from 1 to 6 carbon atoms, and specific examples thereof include a methyl group, an ethyl group, a propyl group, an isopropyl group, a butyl group, an isobutyl group, a sec-butyl group, a tert-butyl group, a pentyl group, a 2-methylbutyl group, a 1-methylpentyl group, a neopentyl group, a 1-ethylpropyl group, a hexyl group, and a 3,3-dimethylbutyl group.

The alkyl group having from 1 to 6 carbon atoms is more preferably an alkyl group having from 1 to 3 carbon atoms.

In Formula (II), the "halogenated alkyl group having from 1 to 6 carbon atoms" refers to a straight or branched halogenated alkyl group having from 1 to 6 carbon atoms, and specific examples thereof include a fluoromethyl group, a difluoromethyl group, a trifluoromethyl group, a 2,2,2-trifluoroethyl group, a perfluoroethyl group, a perfluoropropyl group, a perfluorobutyl group, a perfluoropentyl group, a perfluorohexyl group, a perfluoroisopropyl group, a perfluoroisobutyl group, a chloromethyl group, a chloroethyl group, a chloropropyl group, a bromomethyl group, a bromoethyl group, a bromopropyl group, an iodomethyl group, an iodoethyl group, and an iodopropyl group.

The halogenated alkyl group having from 1 to 6 carbon atoms is more preferably a halogenated alkyl group having from 1 to 3 carbon atoms.

In Formula (II), the "alkoxy group having from 1 to 6 carbon atoms" refers to a straight or branched alkoxy group having from 1 to 6 carbon atoms, and specific examples thereof include methoxy group, ethoxy group, propoxy group, an isopropoxy group, a butoxy group, an isobutoxy group, a sec-butoxy group, a tert-butoxy group, a pentyloxy group, a 2-methylbutoxy group, a 1-methylpentyloxy group, a neopentyloxy group, a 1-ethylpropoxy group, a hexyloxy group, and a 3,3-dimethylbutoxy group.

The alkoxy group having from 1 to 6 carbon atoms is more preferably an alkoxy group having from 1 to 3 carbon atoms.

A preferable aspect of Formula (I) is an aspect in which R¹ represents a group represented by Formula (II) (R³ in Formula (II) preferably represents a fluorine atom, an alkyl group having from 1 to 3 carbon atoms, a halogenated alkyl group having from 1 to 3 carbon atoms, an alkoxy group having from 1 to 3 carbon atoms, or a group represented by Formula (IV).) or a group represented by Formula (III) and R² represents a hydrogen atom, an alkyl group having from 1 to 3 carbon atoms, a group represented by Formula (II), or a group represented by Formula (III), or R¹ and R² taken together represent a group that forms a benzene ring or a cyclohexyl ring together with a carbon atom bound to R¹ and a carbon atom bound to R².

R² in Formula (I) more preferably represents a hydrogen atom, an alkyl group having from 1 to 3 carbon atoms, a group represented by Formula (II) (R³ in Formula (II) still more preferably represents a fluorine atom, an alkyl group having from 1 to 3 carbon atoms, a halogenated alkyl group having from 1 to 3 carbon atoms, an alkoxy group having from 1 to 3 carbon atoms, or a group represented by Formula (IV).) or a group represented by Formula (III), still more preferably represents a hydrogen atom or a methyl group.

In a case in which R¹ in Formula (I) represents a group represented by Formula (II), R³ in Formula (II) represents a halogen atom, an alkyl group having from 1 to 6 carbon atoms, a halogenated alkyl group having from 1 to 6 carbon atoms, an alkoxy group having from 1 to 6 carbon atoms, or a group represented by Formula (IV), as described above, and R³ more preferably represents a fluorine atom, an alkyl group having from 1 to 3 carbon atoms, a halogenated alkyl group having from 1 to 3 carbon atoms, an alkoxy group having from 1 to 3 carbon atoms, or a group represented by Formula (IV), still more preferably a fluorine atom, methyl group, an ethyl group, a trifluoromethyl group, a methoxy group, an ethoxy group, or a group represented by Formula (IV).

In a case in which R² in Formula (I) represents a group represented by Formula (II), a preferable definition of R³ in Formula (II) is the same as the preferable definition of R³ in a case in which R¹ in Formula (I) represents a group represented by Formula (II).

A preferable combination of R¹ and R² in Formula (I) is a combination in which R¹ represents a group represented by Formula (II) (R³ in Formula (II) preferably represents a fluorine atom, an alkyl group having from 1 to 3 carbon atoms, a halogenated alkyl group having from 1 to 3 carbon atoms, an alkoxy group having from 1 to 3 carbon atoms, or a group represented by Formula (IV)) or a group represented by Formula (III), and R² represents a hydrogen atom, an alkyl group having from 1 to 3 carbon atoms, a group represented by Formula (II) (R³ in Formula (II) preferably represents a fluorine atom, an alkyl group having from 1 to 3 carbon atoms, a halogenated alkyl group having from 1 to 3 carbon atoms, an alkoxy group having from 1 to 3 carbon atoms, or a group represented by Formula (IV).) or a group represented by Formula (III).

A more preferable combination of R¹ and R² in Formula (I) is a combination in which R¹ represents a group represented by Formula (II) (R³ in Formula (II) preferably represents a fluorine atom, a methyl group, an ethyl group, a trifluoromethyl group, a methoxy group, an ethoxy group, or a group represented by Formula (IV)) or a group represented by Formula (III), and R² represents a hydrogen atom or a methyl group.

Examples of the cyclic sulfate ester compound represented by Formula (I) include catechol sulfate, 1,2-cyclohexyl sulfate, and compounds shown as the following exemplary compounds 1 to 30, provided that the cyclic sulfate ester compound represented by Formula (I) is not limited thereto.

In the structures of the following exemplary compounds, "Me" represents a methyl group, "Et" represents an ethyl group, "Pr" represents a propyl group, "iPr" represents an isopropyl group, "Bu" represents a butyl group, "tBu" represents a tertiary butyl group, "Pent" represents a pentyl group, "Hex" represents a hexyl group, "OMe" represents a methoxy group, "OEt" represents an ethoxy group, "OPr" represents a propoxy group, "OBu" represents a butoxy group, "OPent" represents a pentyloxy group, and "OHex" represents a hexyloxy group, respectively. Each "wavy line" in R¹ to R³ represents a bonding position.

Stereoisomers derived from the substituents at the 4-position and 5-position of a 2,2-dioxo-1,3,2-dioxathiolane ring may occur, and both are compounds that are encompassed in the embodiment.

Among the cyclic sulfate ester compounds represented by formula (I), in the case in which two or more asymmetric carbon atoms are present in the molecule, the relevant compounds respectively have stereoisomers (diastereomers), but unless particularly stated otherwise, each of the relevant compounds is a mixture of corresponding diastereomers.

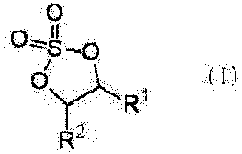

| **Exemplary Compound No.** | R¹ | R² | R³ |
|---|---|---|---|
| 1 | 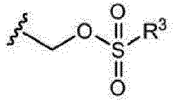 | H | Me |
| 2 | 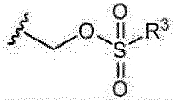 | H | Et |
| 3 | 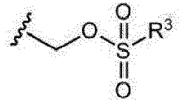 | H | Pr |
| 4 | 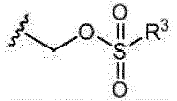 | H | iPr |
| 5 | 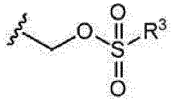 | H | Bu |
| 6 | 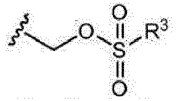 | H | tBu |
| 7 | 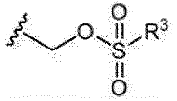 | H | Pent |
| 8 | 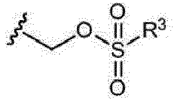 | H | Hex |
| 9 | 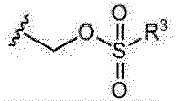 | H | CF₃ |
| 10 | 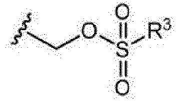 | H | CHF₂ |

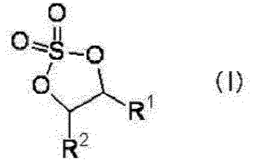

| **Exemplary Compound No.** | R¹ | R² | R³ |
|---|---|---|---|
| 11 | 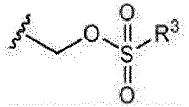 | H | CH₂CF₃ |
| 12 | 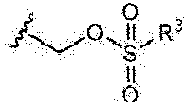 | H | CH₂CH₂CF₃ |
| 13 | 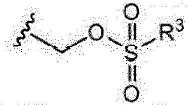 | H | CH₂CH₂CH₂CF₃ |
| 14 | 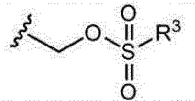 | H | CH₂CH₂CH₂CH₂CF₃ |
| 15 | 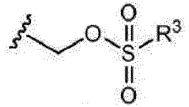 | H | CH₂CH₂CH₂CH₂CH₂CF₃ |
| 16 | 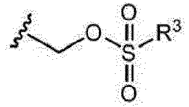 | H | 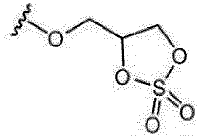 |
| 17 | 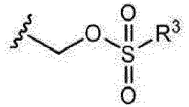 | Me | Me |
| 18 | 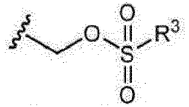 | Et | Me |
| 19 | 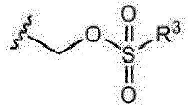 | Hex | Me |
| 20 | 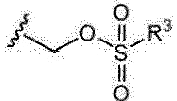 | 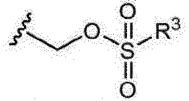 | Me |

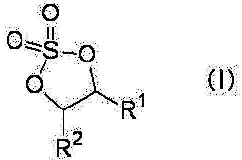

| **Exemplary Compound No.** | R¹ | R² | R³ |
|---|---|---|---|
| 21 | 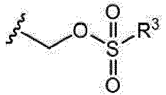 | 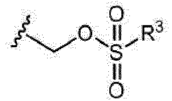 | Et |
| 22 | 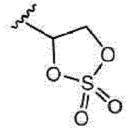 | H | - |
| 23 | 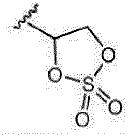 | 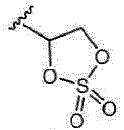 | - |
| 24 | 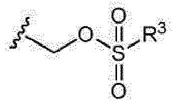 | H | F |
| 25 | 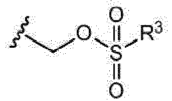 | H | OMe |
| 26 | 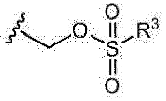 | H | OEt |
| 27 | 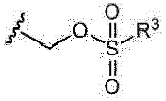 | H | OPr |
| 28 | 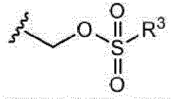 | H | OBu |
| 29 | 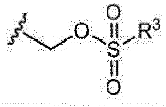 | H | OPent |
| 30 | 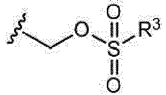 | H | OHex |

Among the cyclic sulfate ester compounds represented by Formula (I), in the case in which two or more asymmetric carbon atoms are present in the molecule, the relevant compounds respectively have stereoisomers (diastereomers), but unless particularly stated otherwise, each of the relevant compounds is a mixture of corresponding diastereomers.

The method for synthesizing the cyclic sulfate ester compound represented by Formula (I) is not particularly limited, and the cyclic sulfate ester compound can be synthesized by a synthesis method described in paragraphs 0062 to 0068 in WO 2012/053644.

Other additive is particularly preferably at least one selected from the group consisting of vinylene carbonate, vinyl ethylene carbonate, 4-fluoroethylene carbonate, 4,4-difluoroethylene carbonate, 4,5-difluoroethylene carbonate, and a cyclic sulfate ester compound (particularly preferably the cyclic sulfate ester compound represented by Formula (I)).

In a case in which the non-aqueous electrolyte solution of the embodiment contains such other additive, such other additive may be contained singly or in combination of two or more kinds.

In a case in which the non-aqueous electrolyte solution of the embodiment contains such other additive, the content of such other additive (total content in a case of two or more kinds) is not particularly limited, and is preferably from 0.001% by mass to 10% by mass, more preferably in the range from 0.05% by mass to 5% by mass, still more preferably in the range from 0.1% by mass to 4% by mass, still more preferably in the range from 0.1% by mass to 2% by mass, particularly preferably in the range from 0.1% by mass to 1% by mass, with respect to the total amount of the non-aqueous electrolyte solution, from the viewpoint that the effect of the embodiment is more effectively exerted.

Next, other component of the non-aqueous electrolyte solution will be described.

The non-aqueous electrolyte solution generally contains an electrolyte and a non-aqueous solvent.

### <Non-Aqueous Solvent>

The non-aqueous solvent can be, if appropriate, selected from various known solvents, and is preferably at least one selected from a cyclic aprotic solvent or an acyclic aprotic solvent.

In a case in which improvement in the flash point of the solvent is demanded in order to enhance the safety of battery, a cyclic aprotic solvent is preferably used as the non-aqueous solvent.

### (Cyclic Aprotic Solvent)

The cyclic aprotic solvent that can be used is a cyclic carbonate, a cyclic carboxylate ester, a cyclic sulfone, or a cyclic ether.

The cyclic aprotic solvent may be used singly or in combination of two or more kinds thereof.

The mixing proportion of the cyclic aprotic solvent in the non-aqueous solvent is 10% by mass to 100% by mass, still more preferably from 20% by mass to 90% by mass, particularly preferably from 30% by mass to 80% by mass. Such a proportion can enhance the conductivity of the electrolyte solution related to charge-discharge characteristics of the battery.

Specific examples of the cyclic carbonate include ethylene carbonate, propylene carbonate, 1,2-butylene carbonate, 2,3-butylene carbonate, 1,2-pentylene carbonate, and 2,3-pentylene carbonate. In particular, ethylene carbonate and/or propylene carbonate high in dielectric constant are/is suitably used. In a case of a battery where graphite is used for a negative electrode active material, ethylene carbonate is more preferable. Such cyclic carbonates may be used in mixture of two or more kinds thereof.

Specific examples of the cyclic carboxylate ester can include γ-butyrolactone, δ-valerolactone, and alkyl-substituted forms such as methyl γ-butyrolactone,ethyl γ-butyrolactone,and ethyl δ-valerolactone.

The cyclic carboxylate ester has a low vapor pressure, a low viscosity, and a high dielectric constant, and can lower the viscosity of the electrolyte solution without lowering the flash point of the electrolyte solution and the degree of dissociation of the electrolyte. Therefore, the cyclic carboxylate ester has the following feature: the conductivity of the electrolyte solution, which is an index associated with discharge characteristics of the battery, can be increased without increasing the inflammability of the electrolyte solution. Therefore, in a case in which improvement in the flash point of the solvent is demanded, a cyclic carboxylate ester is preferably used as the cyclic aprotic solvent. The cyclic carboxylate ester is more preferably γ-butyrolactone.

The cyclic carboxylate ester is preferably used in the form of a mixture with other cyclic aprotic solvent. Examples include a mixture of the cyclic carboxylate ester with a cyclic carbonate and/or an acyclic carbonate.

Examples of the cyclic sulfone include sulfolane, 2-methylsulfolane, 3-methylsulfolane, dimethyl sulfone, diethyl sulfone, dipropyl sulfone, methyl ethyl sulfone, and methyl propyl sulfone.

Examples of the cyclic ether can include dioxolane.

### (Acyclic Aprotic Solvent)

The acyclic aprotic solvent that can be used is an acyclic carbonate, an acyclic carboxylate ester, an acyclic ether, an acyclic phosphate ester, or the like.

The mixing proportion of the acyclic aprotic solvent in the non-aqueous solvent is 10% by mass to 100% by mass, still more preferably from 20% by mass to 90% by mass, particularly preferably from 30% by mass to 80% by mass.

Specific examples of the acyclic carbonate include dimethyl carbonate, methyl ethyl carbonate, diethyl carbonate, methyl propyl carbonate, methyl isopropyl carbonate, ethyl propyl carbonate, dipropyl carbonate, methyl butyl carbonate, ethyl butyl carbonate, dibutyl carbonate, methyl pentyl carbonate, ethyl pentyl carbonate, dipentyl carbonate, methyl heptyl carbonate, ethyl heptyl carbonate, diheptyl carbonate, methyl hexyl carbonate, ethyl hexyl carbonate, dihexyl carbonate, methyl octyl carbonate, ethyl octyl carbonate, dioctyl carbonate, and methyl trifluoroethyl carbonate. Such acyclic carbonates may be used in mixture of two or more kinds thereof.

Specific examples of the acyclic carboxylate ester include methyl pivalate.

Specific examples of the acyclic ether include dimethoxyethane.

Specific examples of the acyclic phosphate ester include trimethyl phosphate.

### (Combination of Solvents)

The non-aqueous solvent used in the non-aqueous electrolyte solution of the embodiment may be used singly or in combination of a plurality of kinds. Only the cyclic aprotic solvent may be used singly or in combination of a plurality of kinds, only the acyclic aprotic solvent may be used singly or in combination of a plurality of kinds, or any mixture of the cyclic aprotic solvent and the acyclic protic solvent may be used. In a case in which improvements in load characteristics and low temperature characteristics of the battery are particularly intended, any combination of the cyclic aprotic solvent and the acyclic aprotic solvent is preferably used as the non-aqueous solvent.

It is most preferable that the cyclic carbonate is employed as the cyclic aprotic solvent and the acyclic carbonate is employed as the acyclic aprotic solvent in terms of the electrochemical stability of the electrolyte solution. Any combination of the cyclic carboxylate ester and the cyclic carbonate and/or the acyclic carbonate can also enhance the conductivity of the electrolyte solution related to charge-discharge characteristics of the battery.

Specific examples of the combination of the cyclic carbonate and the acyclic carbonate include ethylene carbonate with dimethyl carbonate, ethylene carbonate with methyl ethyl carbonate, ethylene carbonate with diethyl carbonate, propylene carbonate with dimethyl carbonate, propylene carbonate with methyl ethyl carbonate, propylene carbonate with diethyl carbonate, ethylene carbonate with propylene carbonate and methyl ethyl carbonate, ethylene carbonate with propylene carbonate and diethyl carbonate, ethylene carbonate with dimethyl carbonate and methyl ethyl carbonate, ethylene carbonate with dimethyl carbonate and diethyl carbonate, ethylene carbonate with methyl ethyl carbonate and diethyl carbonate, ethylene carbonate with dimethyl carbonate, methyl ethyl carbonate and diethyl carbonate, ethylene carbonate with propylene carbonate, dimethyl carbonate and methyl ethyl carbonate, ethylene carbonate with propylene carbonate, dimethyl carbonate and diethyl carbonate, ethylene carbonate with propylene carbonate, methyl ethyl carbonate and diethyl carbonate, and ethylene carbonate with propylene carbonate, dimethyl carbonate, methyl ethyl carbonate and diethyl carbonate.

The mixing ratio of the cyclic carbonate and the acyclic carbonate is as follows on a mass ratio: cyclic carbonate: acyclic carbonate is from 5:95 to 80:20, still more preferably from 10:90 to 70:30, particularly preferably from 15:85 to 55:45. Such ratios can inhibit the viscosity of the electrolyte solution from being increased and increase the degree of dissociation of the electrolyte, thereby increasing the conductivity of the electrolyte solution related to charge-discharge characteristics of the battery. The solubility of the electrolyte can also be further increased. Accordingly, an electrolyte solution having excellent electrical conductivity at normal temperature or at a low temperature can be obtained, and whereby load characteristics of the battery in a range of from normal temperature to a low temperature can be improved.

Specific examples of the combination of the cyclic carboxylate ester and the cyclic carbonate and/or the acyclic carbonate include γ-butyrolactone with ethylene carbonate, γ-butyrolactone with ethylene carbonate and dimethyl carbonate, γ-butyrolactone with ethylene carbonate and methyl ethyl carbonate, γ-butyrolactone with ethylene carbonate and diethyl carbonate, γ-butyrolactone with propylene carbonate, γ-butyrolactone with propylene carbonate and dimethyl carbonate, γ-butyrolactone with propylene carbonate and methyl ethyl carbonate, γ-butyrolactone with propylene carbonate and diethyl carbonate, γ-butyrolactone with ethylene carbonate and propylene carbonate, γ-butyrolactone with ethylene carbonate, propylene carbonate and dimethyl carbonate, γ-butyrolactone with ethylene carbonate, propylene carbonate and methyl ethyl carbonate, γ-butyrolactone with ethylene carbonate, propylene carbonate and diethyl carbonate, γ-butyrolactone with ethylene carbonate, dimethyl carbonate and methyl ethyl carbonate, γ-butyrolactone with ethylene carbonate, dimethyl carbonate and diethyl carbonate, γ-butyrolactone with ethylene carbonate, methyl ethyl carbonate and diethyl carbonate, γ-butyrolactone with ethylene carbonate, dimethyl carbonate, methyl ethyl carbonate and diethyl carbonate, γ-butyrolactone with ethylene carbonate, propylene carbonate, dimethyl carbonate and methyl ethyl carbonate, γ-butyrolactone with ethylene carbonate, propylene carbonate, dimethyl carbonate and diethyl carbonate, γ-butyrolactone with ethylene carbonate, propylene carbonate, methyl ethyl carbonate and diethyl carbonate, γ-butyrolactone with ethylene carbonate, propylene carbonate, dimethyl carbonate, methyl ethyl carbonate and diethyl carbonate, γ-butyrolactone with sulfolane, γ-butyrolactone with ethylene carbonate and sulfolane, γ-butyrolactone with propylene carbonate and sulfolane, γ-butyrolactone with ethylene carbonate, propylene carbonate and sulfolane, and γ-butyrolactone with sulfolane and dimethyl carbonate.

### (Other Solvent)

Examples of the non-aqueous solvent include any solvent other than the above solvents.

Specific examples of such other solvent can include amides such as dimethylformamide, acyclic carbamates such as methyl-N,N-dimethyl carbamate, cyclic amides such as N-methylpyrrolidone, cyclic ureas such as N,N-dimethylimidazolidinone, boron compounds such as trimethyl borate, triethyl borate, tributyl borate, trioctyl borate, and trimethylsilyl borate, and polyethylene glycol derivatives represented by the following Formulae.

HO(CH₂CH₂O)ₐH

HO[CH₂CH(CH₃)O]_{b}H

CH₃O(CH₂CH₂O)_{c}H

CH₃O[CH₂CH(CH₃)O]_{d}H

CH₃O(CH₂CH₂O)ₑCH₃

CH₃O[CH₂CH(CH₃)O]_{f}CH₃

C₉H₁₉PhO(CH₂CH₂O)_{g}[CH(CH₃)O]ₕCH₃

(Ph represents a phenyl group)

CH₃O[CH₂CH(CH₃)O]ᵢCO[OCH(CH₃)CH₂]ⱼOCH₃

In the above Formulae, a to f each represent an integer from 5 to 250, g to j each represent an integer from 2 to 249, 5 ≤ g + h ≤ 250, and 5 ≤ i + j ≤ 250.

### <Electrolyte>

The non-aqueous electrolyte solution of the embodiment can contain any of various known electrolytes. Any electrolyte that is usually used as an electrolyte for non-aqueous electrolyte solutions can be used.

Specific examples of the electrolyte include an alkali metal salt excluding the above lithium fluorophosphate. Further specific examples of the electrolyte include tetraalkylammonium salts such as (C₂H₅)₄NPF₆, (C₂H₅)₄NBF₄, (C₂H₅)₄NClO₄, (C₂H₅)₄NAsF₆, (C₂H₅)₄N₂SiF₆, (C₂H₅)₄NOSO₂CₖF_{(2k + 1)} (k = an integer from 1 to 8), and (C₂H₅)₄NPFₙ[CₖF_{(2k + 1)}]₍₆₋ₙ₎ (n = an integer from 1 to 5, k = an integer from 1 to 8), and lithium salts such as LiPF₆, LiBF₄, LiClO₄, LiAsF₆, Li₂SiF₆, LiOSO₂CₖF_{(2k + 1)} (k = an integer from 1 to 8), and LiPFₙ[CₖF_{(2k + 1)}]₍₆₋ₙ₎ (n = an integer from 1 to 5, k = an integer from 1 to 8). Any of lithium salts represented by the following Formulae can also be used.

LiC(SO₂R²⁷)(SO₂R²⁸)(SO₂R²⁹), LiN(SO₂OR³⁰)(SO₂OR³¹), and LiN(SO₂R³²)(SO₂R³³) (where R²⁷ to R³³ may be the same as or different from each other, and each represent a perfluoroalkyl group having from 1 to 8 carbon atoms). The electrolytes may be used singly or in mixture of two or more kinds thereof.

In particular, a lithium salt is particularly preferable, and LiPF₆, LiBF₄, LiOSO₂CₖF_{(2k + 1)} (k = an integer from 1 to 8), LiClO₄, LiAsF₆, LiNSO₂[CₖF_{(2k + 1)}]₂ (k = an integer from 1 to 8), and LiPFₙ[CₖF_{(2k + 1)}]₍₆₋ₙ₎ (n = an integer from 1 to 5, k = an integer from 1 to 8) are preferable.

The electrolyte is included in a concentration of usually from 0.1 mol/L to 3 mol/L, preferably from 0.5 mol/L to 2 mol/L in the non-aqueous electrolyte solution.

In a case in which a cyclic carboxylate ester such as γ-butyrolactone is used in combination as the non-aqueous solvent in the non-aqueous electrolyte solution, LiPF₆ is particularly desirably contained. LiPF₆ has a high degree of dissociation and therefore can increase the conductivity of the electrolyte solution, and also acts to suppress the reductive decomposition reaction of the electrolyte solution on the negative electrode. LiPF₆ may be used singly, or may be used together with an electrolyte other than LiPF₆. Any electrolyte can be used as such other electrolyte as long as such an electrolyte is usually used as an electrolyte for non-aqueous electrolyte solutions, and a lithium salt other than LiPF₆ among the specific examples of the lithium salt is preferable (excluding the lithium fluorophosphate).

Specific examples include LiPF₆ with LiBF₄, LiPF₆ with LiN[SO₂CₖF_{(2k + 1)}]₂ (k = an integer from 1 to 8), and LiPF₆ with LiBF₄ and LiN[SO₂CₖF_{(2k + 1)}] (k = an integer from 1 to 8).

The proportion of LiPF₆ in the lithium salt is desirably from 1% by mass to 100% by mass, preferably from 10% by mass to 100% by mass, still more preferably from 50% by mass to 100% by mass. Such an electrolyte is preferably included in a concentration of from 0.1 mol/L to 3 mol/L, preferably from 0.5 mol/L to 2 mol/L in the non-aqueous electrolyte solution.

The non-aqueous electrolyte solution of the embodiment can also contain an overcharge protection agent.

Examples of the overcharge protection agent include aromatic compounds such as biphenyl, alkylbiphenyl, terphenyls (o-, m-, p-forms), partially hydrogenated products of terphenyls (o-, m-, p-forms) (for example, 1,2-dicyclohexylbenzene, 2-phenylbicyclohexyl, 1,2-diphenylcyclohexane, and o-cyclohexylbiphenyl), cyclohexylbenzene, t-butylbenzene, 1,3-di-t-butylbenzene, t-amylbenzene, diphenylether, and dibenzofuran; partially fluorinated products of aromatic compounds, such as fluorotoluenes (o-, m-, p-forms), difluorotoluene, trifluorotoluene, tetrafluorotoluene, pentafluorotoluene, fluorobenzene, difluorobenzenes (o-, m-, p-forms), 1-fluoro-4-t-butylbenzene, 2-fluorobiphenyl, and fluorocyclohexylbenzenes (for example, 1-fluoro-2-cyclohexylbenzene, 1-fluoro-3-cyclohexylbenzene, and 1-fluoro-4-cyclohexylbenzene); and fluorine-containing anisole compounds such as 2,4-difluoroanisole, 2,5-difluoroanisole, 2,6-difluoroanisole, and 3,5-difluoroanisole.

In particular, the aromatic compounds exemplified above are preferable.

Such overcharge protection agents may be used singly or in combination of two or more kinds thereof.

In a case in which two or more kinds are used in combination, a combination of cyclohexylbenzene and t-butylbenzene or t-amylbenzene, and any combination of at least one selected from aromatic compounds containing no oxygen, such as biphenyl, alkylbiphenyl, terphenyl, a partially hydrogenated product of terphenyl, cyclohexylbenzene, t-butylbenzene and t-amylbenzene, and at least one selected from aromatic compounds containing oxygen, such as diphenylether and dibenzofuran are particularly preferable, in terms of the balance of overcharge protection characteristics and high temperature storage characteristics.

In a case in which the non-aqueous electrolyte solution of the embodiment contains the overcharge protection agent, the content of the overcharge protection agent is not particularly limited, and is, for example, 0.1% by mass or more, preferably 0.2% by mass or more, still more preferably 0.3% by mass or more, particularly preferably 0.5% by mass or more.

The content of the overcharge protection agent is, for example, 10% by mass or less, preferably 5% by mass or less, more preferably 3% by mass or less, still more preferably 2% by mass or less.

The non-aqueous electrolyte solution of the embodiment may contain at least one compound other than the above compounds, as an additive, as long as any object of the embodiment is not impaired.

Specific examples of such other compound can include sulfate esters such as dimethyl sulfate, diethyl sulfate, ethylene sulfate, propylene sulfate, butene sulfate, pentene sulfate, and vinylene sulfate; and sulphur compounds such as sulfolane, 3-sulfolene, and divinyl sulfone.

Such compounds may be used singly or in combination of two or more kinds thereof.

In particular, ethylene sulfate, propylene sulfate, butene sulfate, and pentene sulfate are preferable.

The non-aqueous electrolyte solution of the embodiment is not only suitable as a non-aqueous electrolyte solution for a lithium secondary battery, but can also be used as a non-aqueous electrolyte solution for a primary battery, a non-aqueous electrolyte solution for a electrochemical capacitor, or a non-aqueous electrolyte solution for an electric double layer capacitor or an aluminum electrolytic capacitor.

### <First Aspect>

A first aspect of the non-aqueous electrolyte solution of the embodiment is an aspect in which the additive (X) is at least one of lithium monofluorophosphate or lithium difluorophosphate (namely, lithium fluorophosphate).

As a result of studies by the inventors, it has been found that battery resistance may be increased in a battery including the non-aqueous electrolyte solution for a battery, in which the solution contains lithium fluorophosphate.

Although not clear, the reason for the increase in battery resistance is presumed as follows.

In a battery including the non-aqueous electrolyte solution containing lithium fluorophosphate, the Cu element contained in the negative electrode current collector may be eluted into the non-aqueous electrolyte solution by an interaction with lithium fluorophosphate in the non-aqueous electrolyte solution. That is, the Cu element may be eluted, thereby causing the surface of the negative electrode current collector to be changed, and causing a decomposition reaction of a non-aqueous solvent in the non-aqueous electrolyte solution to easily occur on the surface. As a result, a decomposed product of the non-aqueous solvent may deposit on the surface of the negative electrode current collector, thereby resulting in an increase in battery resistance.

By further studies, the inventors have found that the battery resistance can be reduced by limiting the Cu element content in the non-aqueous electrolyte solution containing lithium fluorophosphate in the battery to a range of from 0.001 ppm by mass to less than 5 ppm by mass with respect to the total amount of the non-aqueous electrolyte solution. Thereby, the inventors have completed the first aspect of the embodiment.

That is, the non-aqueous electrolyte solution of first aspect is a non-aqueous electrolyte solution that can suppress an increase in battery resistance while containing lithium fluorophosphate.

Accordingly, the non-aqueous electrolyte solution of the first aspect is expected to have the effect of improving battery life.

The additive (X) in the first aspect preferably includes lithium difluorophosphate from the viewpoint of the effect of the first aspect is more effectively exerted.

The content of the additive (X) (namely, lithium fluorophosphate) in the non-aqueous electrolyte solution of the first aspect (total content in a case of two or more kinds) is not particularly limited, and is preferably in a range of from 0.001% by mass to 5% by mass, more preferably from 0.05% by mass to 5% by mass, from the viewpoint of the effect of the first aspect is more effectively exerted.

The preferable mode described with respect to the non-aqueous electrolyte solution of the embodiment can be, if appropriate, adopted as other preferable mode of the non-aqueous electrolyte solution of the first aspect.

Examples of other additive that can be contained in the non-aqueous electrolyte solution of the first aspect also include an oxalato compound and a sultone compound, in addition to the above other additives (namely, the carbonate compound having a carbon-carbon unsaturated bond, the carbonate compound substituted with a fluorine atom, and the fluorophosphoric acid compound other than lithium monofluorophosphate and lithium difluorophosphate).

Examples of the oxalato compound include lithium difluorobis(oxalato)phosphate, lithium tetrafluoro(oxalato)phosphate, lithium tris(oxalato)phosphate, lithium difluoro(oxalato)borate, and lithium bis(oxalato)borate. In particular, lithium difluorobis(oxalato)phosphate, lithium tetrafluoro(oxalato)phosphate, and lithium bis(oxalato)borate are preferable.

Examples of the sultone compound include sultones such as 1,3-propanesultone, 1,4-butanesultone, 1,3 -propenesultone, 1 -methyl-1,3-propenesultone, 2-methyl-1,3-propenesultone, and 3-methyl-1,3-propenesultone (excluding the cyclic sulfate ester compound). In particular, 1,3-propanesultone and 1,3-propenesultone are preferable.

### <Second Aspect>

A second aspect of the non-aqueous electrolyte solution of the embodiment is an aspect in which the additive (X) is a compound represented by Formula (XA).

As a result of studies by the inventors, it has been found that battery resistance may be increased in a battery including the non-aqueous electrolyte solution for a battery, in which the solution contains a lithium salt including a boron atom or a phosphorus atom and having a specified structure (specifically, the compound represented by Formula (XA)).

Although not clear, the reason for the increase in battery resistance is presumed as follows.

In a battery including the non-aqueous electrolyte solution containing the compound represented by Formula (XA), the Cu element contained in the negative electrode current collector may be eluted into the non-aqueous electrolyte solution by an interaction with the compound represented by Formula (XA) in the non-aqueous electrolyte solution. That is, the Cu element may be eluted, thereby causing the surface of the negative electrode current collector to be changed, and causing a decomposition reaction of a non-aqueous solvent in the non-aqueous electrolyte solution to easily occur on the surface. As a result, a decomposed product of the non-aqueous solvent may deposit on the surface of the negative electrode current collector, thereby resulting in an increase in battery resistance.

By further studies, the inventors have found that the battery resistance can be reduced by limiting the Cu element content in the non-aqueous electrolyte solution containing the compound represented by Formula (XA) in the battery to a range of from 0.001 ppm by mass to less than 5 ppm by mass with respect to the total amount of the non-aqueous electrolyte solution. Thereby, the inventors have completed the second aspect of the embodiment.

That is, the non-aqueous electrolyte solution of second aspect is a non-aqueous electrolyte solution that can suppress an increase in battery resistance while containing a lithium salt including a boron atom or a phosphorus atom and having a specified structure (specifically, the compound represented by Formula (XA)).

Accordingly, the non-aqueous electrolyte solution of the second aspect is expected to have the effect of improving battery life.

The compound represented by Formula (XA) in the second aspect preferably includes at least one selected from the group consisting of lithium difluorobis(oxalato)phosphate, lithium tetrafluoro(oxalato)phosphate, lithium difluoro(oxalato)borate, and lithium bis(oxalato)borate, from the viewpoint of the effect of the second aspect is more effectively exerted.

The content of the additive (X) (namely, the compound represented by Formula (XA)) in the non-aqueous electrolyte solution of the second aspect (total content in a case of two or more kinds) is not particularly limited, and is preferably from 0.001% by mass to 5% by mass, more preferably from 0.05% by mass to 5% by mass, from the viewpoint of the effect of the second aspect is more effectively exerted.

The preferable mode described with respect to the non-aqueous electrolyte solution of the embodiment can be, if appropriate, adopted as other preferable mode of the non-aqueous electrolyte solution of the second aspect.

Examples of other additive that can be contained in the non-aqueous electrolyte solution of the second aspect include lithium monofluorophosphate, lithium difluorophosphate, and a sultone compound, in addition to the above other additives (namely, the carbonate compound having a carbon-carbon unsaturated bond, the carbonate compound substituted with a fluorine atom, and the fluorophosphoric acid compound other than lithium monofluorophosphate and lithium difluorophosphate).

Examples of the sultone compound include sultones 1,3-propanesultone, 1,4-butanesultone, 1,3 -propenesultone, 1 -methyl-1,3-propenesultone, 2-methyl-1,3-propenesultone, and 3-methyl-1,3-propenesultone (excluding the cyclic sulfate ester compound). In particular, 1,3-propanesultone and 1,3-propenesultone are preferable.

### <ThirdAspect>

A third aspect of the non-aqueous electrolyte solution of the embodiment is an aspect in which the additive (X) is at least one compound selected from the group consisting of the sulfonate ester compound represented by Formula (A), the sulfonate ester compound represented by Formula (B), the sulfonate ester compound represented by Formula (C), and the sulfonate ester compound represented by Formula (D).

As a result of studies by the inventors, it has been found that a battery resistance may be increased in a battery including the non-aqueous electrolyte solution for a battery, in which the solution contains a specified sulfonate ester compound (specifically, the additive (X) in the third aspect).

Although not clear, the reason for the increase in battery resistance is presumed as follows.

In a battery including the non-aqueous electrolyte solution containing the additive (X) in the third aspect, the Cu element contained in the negative electrode current collector may be eluted into the non-aqueous electrolyte solution by an interaction with the additive (X) in the non-aqueous electrolyte solution. That is, the Cu element may be eluted, thereby causing the surface of the negative electrode current collector to be changed, and causing a decomposition reaction of a non-aqueous solvent in the non-aqueous electrolyte solution to easily occur on the surface. As a result, a decomposed product of the non-aqueous solvent may deposit on the surface of the negative electrode current collector, thereby resulting in an increase in battery resistance.

By further studies, the inventors have found that the battery resistance can be reduced by limiting the Cu element content in the non-aqueous electrolyte solution containing the additive (X) in the third aspect in the battery to a range of from 0.001 ppm by mass to less than 5 ppm by mass with respect to the total amount of the non-aqueous electrolyte solution. Thereby, the inventors have completed the third aspect of the embodiment.

That is, the non-aqueous electrolyte solution of the third aspect is a non-aqueous electrolyte solution that can suppress an increase in battery resistance while being a non-aqueous electrolyte solution containing the additive (X), which is a specified sulfonate ester compound.

Accordingly, the non-aqueous electrolyte solution of the third aspect is expected to have the effect of improving battery life.

The content of the additive (X) (namely, at least one compound selected from the group consisting of the sulfonate ester compound represented by Formula (A), the sulfonate ester compound represented by Formula (B), the sulfonate ester compound represented by Formula (C), and the sulfonate ester compound represented by Formula (D)) (total content in a case of two or more kinds) in the non-aqueous electrolyte solution of the third aspect is not particularly limited, and is preferably from 0.001% by mass to 5% by mass, more preferably from 0.05% by mass to 5% by mass, from the viewpoint that the effect of the third aspect is more effectively exerted.

The preferable mode described with respect to the non-aqueous electrolyte solution of the embodiment can be, if appropriate, adopted as other preferable mode of the non-aqueous electrolyte solution of the third aspect.

Examples of other additive that can be contained in the non-aqueous electrolyte solution of the third aspect also include lithium monofluorophosphate, lithium difluorophosphate, and an oxalato compound, in addition to the above other additives (namely, the carbonate compound having a carbon-carbon unsaturated bond, the carbonate compound substituted with a fluorine atom, and the fluorophosphoric acid compound other than lithium monofluorophosphate and lithium difluorophosphate).

Examples of the oxalato compound include lithium difluorobis(oxalato)phosphate, lithium tetrafluoro(oxalato)phosphate, lithium tris(oxalato)phosphate, lithium difluoro(oxalato)borate, and lithium bis(oxalato)borate. In particular, lithium difluorobis(oxalato)phosphate, lithium tetrafluoro(oxalato)phosphate, and lithium bis(oxalato)borate are preferable.

### [Lithium Secondary Battery]

The lithium secondary battery of the embodiment is a lithium secondary battery including a positive electrode, a negative electrode including a negative electrode current collector containing a Cu element, and an electrolyte solution, in which the electrolyte solution contains the additive (X) and a Cu element whose content in the non-aqueous electrolyte solution is from 0.001 ppm by mass to less than 5 ppm by mass with respect to the total amount of the non-aqueous electrolyte solution.

The non-aqueous electrolyte solution in the lithium secondary battery of the embodiment is the non-aqueous electrolyte solution of the embodiment. A preferable aspect of the non-aqueous electrolyte solution in the lithium secondary battery of the embodiment is the same as the preferable aspect of the non-aqueous electrolyte solution of the embodiment.

### <Negative Electrode>

The negative electrode in the present embodiment includes a negative electrode active material.

The negative electrode active material in the negative electrode, which is used, is at least one selected from the group consisting of metal lithium, a lithium-containing alloy, a metal or an alloy capable of alloying with lithium, an oxide capable of doping and dedoping with a lithium ion, a transition metal nitride capable of doping and dedoping with a lithium ion, and a carbon material capable of doping and dedoping with a lithium ion (these may be singly or in mixture of two or more kinds thereof).

Examples of the metal or the alloy capable of alloying with lithium (or a lithium ion) can include silicon, a silicon alloy, tin, and a tin alloy. Lithium titanate may also be adopted.

In particular, a carbon material capable of doping and dedoping with a lithium ion is preferable. Examples of such a carbon material include carbon black, activated carbon, a graphite material (artificial graphite or natural graphite), and an amorphous carbon material. The form of the carbon material may be any of a fibrous form, a spherical form, a potato form, and a flake form.

Specific examples of the amorphous carbon material include hard carbon, cokes, mesocarbon microbeads (MCMB) calcined at 1500°C or lower, and mesophase pitch-based carbon fibers (MCF).

Examples of the graphite material include natural graphite and artificial graphite. Examples of the artificial graphite that can be used include graphitized MCMB and graphitized MCF. Examples of the graphite material that can be used include a boron-containing graphite material. Examples of the graphite material that can be used also include a graphite material coated with a metal such as gold, platinum, silver, copper or tin, a graphite material coated with amorphous carbon, and a mixture of amorphous carbon and graphite.

Such carbon materials may be used singly or in mixture of two or more kinds thereof.

The carbon material is particularly preferably a carbon material whose interplanar spacing d(002) of the (002) plane measured by an X-ray analysis is 0.340 nm or less. The carbon material is also preferably a graphite having a true density of 1.70 g/cm³ or more or a highly crystalline carbon material having properties close thereto. The use of any of the carbon materials as described above can further increase the energy density of the battery.

The negative electrode in the embodiment includes a negative electrode current collector containing a Cu element.

The negative electrode current collector may contain an element other than a Cu element.

The negative electrode current collector may contain a metal material such as nickel, stainless steel, and nickel-plated steel.

### <Positive Electrode>

Examples of the positive electrode active material in the positive electrode include transition metal oxides or transition metal sulfides, such as MoS₂, TiS₂, MnO₂, and V₂O₅, composite oxides made of lithium and transition metals, such as LiCoO₂, LiMnO₂, LiMn₂O₄, LiNiO₂, LiNi_{X}Co_{(1-X})O₂ [0<X<1], Li_{1+α}Me_{1-α}O₂ (Me represents a transition metal element including Mn, Ni, and Co, 1.0 ≤ (1 + α)/(1 - α) ≤ 1.6) having an α-NaFeO₂ type crystal structure, LiNiₓCo_{y}Mn_{z}O₂ [x + y + z = 1, 0<x<1, 0<y<1, 0<z<1] (for example, LiNi_{0.33}CO_{0.33}Mn_{0.33}O₂ or LiNi_{0.5}Co_{0.2}Mn_{0.3}O₂), LiFePO₄, and LiMnPO₄, and electroconductive polymer materials such as polyaniline, polythiophene, polypyrrole, polyacetylene, polyacene, dimercaptothiadiazole, and a polyaniline composite. In particular, a composite oxide made of lithium and a transition metal is preferable. In a case in which the negative electrode is made of a lithium metal or a lithium alloy, a carbon material can also be used as the positive electrode. A mixture of a composite oxide made of lithium and a transition metal with a carbon material can also be used as the positive electrode.

Such positive electrode active materials may be used singly or in mixture of two or more kinds thereof. In a case in which the positive electrode active material is insufficient in electroconductivity, the positive electrode can be constructed by using the positive electrode active material together with an electroconductive aid. Examples of the electroconductive aid can include carbon materials such as carbon black, amorphous whisker, and graphite.

The material of the positive electrode current collector in the positive electrode is not particularly limited, and any known one can be used.

Specific examples include metal materials such as aluminum, stainless steel, nickel, titanium and tantalum; and carbon materials such as carbon cloth and carbon paper.

### <Separator>

The lithium secondary battery of the embodiment preferably includes a separator between the negative electrode and the positive electrode.

The separator is a film that electrically insulates the positive electrode and the negative electrode and allows for lithium ion permeation, and examples thereof include a porous film and a polymer electrolyte.

The porous film to be suitably used is a microporous polymer film, and examples of the material thereof include polyolefin, polyimide, polyvinylidene fluoride, and polyester.

A porous polyolefin film is particularly preferable, and specific examples thereof can include a porous polyethylene film, a porous polypropylene film, or a multilayer film of a porous polyethylene film and a polypropylene film. A porous polyolefin film may be coated with another resin excellent in thermal stability.

Examples of the polymer electrolyte include a polymer in which a lithium salt is dissolved, and a polymer swollen with an electrolyte solution.

The non-aqueous electrolyte solution of the embodiment may also be used in order to swell a polymer to provide a polymer electrolyte.

### <Configuration of Battery >

The lithium secondary battery of the embodiment can be formed in any of various known shapes and can be formed into a cylindrical shape, a coin shape, a rectangular shape, a laminate type, a film shape, and any other optional shape. The basic structure of the battery, however, is the same irrespective of the shape thereof, and design modifications can be made according to purpose.

Examples of the lithium secondary battery of the embodiment (non-aqueous electrolyte solution secondary battery) include a laminate type battery.

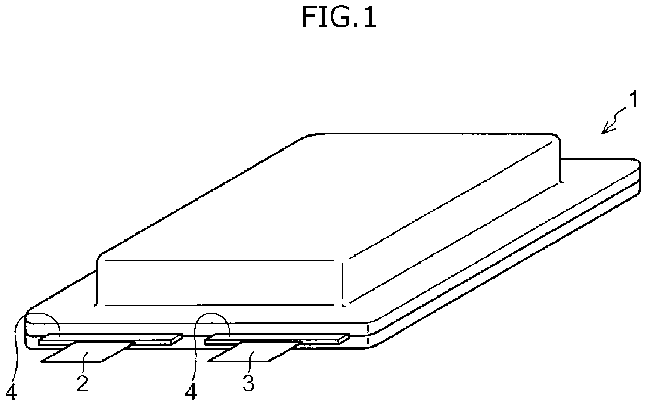

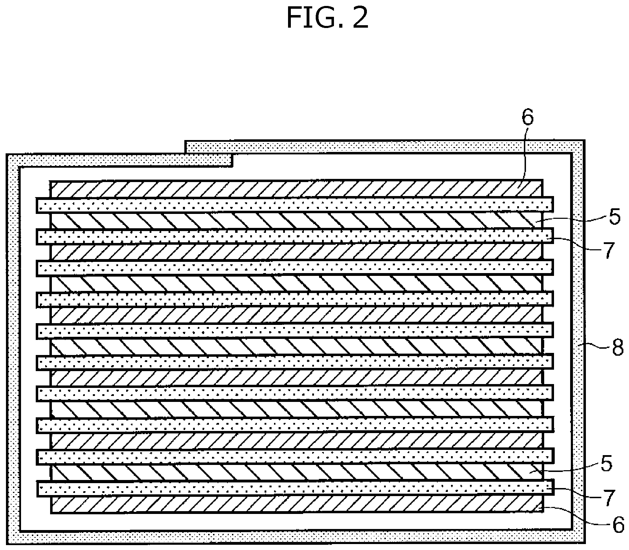

FIG. 1 is a schematic perspective diagram illustrating one example of a laminate type battery as one example of the lithium secondary battery of the embodiment, and FIG. 2 is a schematic cross-sectional diagram in the thickness direction of a layered electrode assembly accommodated in the laminate type battery illustrated in FIG. 1.

The laminate type battery illustrated in FIG. 1 is provided with a laminate outer package 1 in which a non-aqueous electrolyte solution (not illustrated in FIG. 1) and a layered electrode assembly (not illustrated in FIG. 1) are accommodated and whose inside is encapsulated by sealing the outer edge portion. For example, an aluminum laminate outer package is used as the laminate outer package 1.

The layered electrode assembly accommodated in the laminate outer package 1 includes a layered body formed by layering a positive plate 5 and a negative plate 6 with a separator 7 being interposed therebetween, and a separator 8 surrounding the layered body, as illustrated in FIG. 2. The positive plate 5, the negative plate 6, the separator 7 and the separator 8 are impregnated with the non-aqueous electrolyte solution of the embodiment.

A plurality of the positive plates 5 in the layered electrode assembly are each electrically connected to a positive electrode terminal 2 via a positive electrode tab (not illustrated), and the positive electrode terminal 2 is partially protruded from the peripheral end portion of the laminate outer package 1 (FIG. 1). Such a part where the positive electrode terminal 2 is protruded at the peripheral end portion of the laminate outer package 1 is sealed by an insulating seal 4.

A plurality of the negative plates 6 in the layered electrode assembly are each again electrically connected to a negative electrode terminal 3 via a negative electrode tab (not illustrated), and the negative electrode terminal 3 is partially protruded from the peripheral end portion of the laminate outer package 1 (FIG. 1). Such a part where the negative electrode terminal 3 is protruded at the peripheral end portion of the laminate outer package 1 is sealed by the insulating seal 4.

The laminate type battery according to one example includes five of the positive plates 5 and six of the negative plates 6, and each of the positive plates 5 and each of the negative plates 6 are layered with the separator 7 being interposed therebetween so that both the outermost layers located at both sides are the negative plates 6. The number of the positive plates, the number of the negative plates, and the arrangement in the laminate type battery, however, are not limited to such one example and may be variously modified, of course.

The lithium secondary battery of the embodiment may be a lithium secondary battery obtained by charging and discharging a lithium secondary battery (a lithium secondary battery before charge and discharge) that includes a negative electrode, a positive electrode, and the non-aqueous electrolyte solution of the embodiment.

Specifically, the lithium secondary battery of the embodiment may be a lithium secondary battery (a lithium secondary battery that has been charged and discharged) obtained by first producing a lithium secondary battery before charge and discharge that includes a negative electrode, a positive electrode and the non-aqueous electrolyte solution of the embodiment and subsequently charging and discharging the lithium secondary battery before charge and discharge one or more times.

There are no particular limitations on the use of the lithium secondary battery of the embodiment, and it can be used in various known applications. For example, the lithium secondary battery can be widely utilized in small-sized portable devices as well as in large-sized devices, such as notebook computers, mobile computers, mobile telephones, headphone stereos, video movie cameras, liquid crystal television sets, handy cleaners, electronic organizers, calculators, radios, back-up power supply applications, motors, automobiles, electric cars, motorcycles, electric motorcycles, bicycles, electric bicycles, illuminating devices, game players, time pieces, electric tools, and cameras.

### Examples

Hereinafter, the invention will be described more specifically by way of Examples, but the invention is not limited thereto.

In the following Examples, the "amount of addition" represents the content in the finally obtained non-aqueous electrolyte solution (namely, the amount with respect to the total amount of the finally obtained non-aqueous electrolyte solution).

### [Example 1A]

A laminate type battery having the same configuration as in the laminate type battery illustrated in FIG. 1 was produced as a lithium secondary battery (hereinafter, also simply referred to as "battery") according to the following procedure.

### <Production of Negative Electrode>

98 parts by mass of artificial graphite, 1 part by mass of carboxymethyl cellulose, and 1 part by mass of a SBR latex were kneaded in a water solvent, thereby preparing a negative electrode mixture slurry in a paste form.

Next, the negative electrode mixture slurry was applied on both surfaces of a negative electrode current collector made of a strip-shaped copper foil having a thickness of 12 µm, and dried, and thereafter the resultant was compressed with a roll press, thereby providing a sheet-like negative electrode (negative plate) composed of a negative electrode current collector and a negative electrode active material layer. The coating density of the negative electrode active material layer was 12 mg/cm², and the packing density was 1.45 g/mL.

Six of the negative plates were produced, and a negative electrode tab was attached to each of the six resulting negative plates.

### <Production of Positive Electrode>

98 parts by mass of LiCoO₂, 1 part by mass of acetylene black, and 1 part by mass of polyvinylidene fluoride were kneaded in N-methylpyrrolidinone as a solvent, thereby preparing a positive electrode mixture slurry in a past form.

Next, the positive electrode mixture slurry was applied on both surfaces of a positive electrode current collector made of a strip-shaped aluminum foil having a thickness of 20 µm, and dried, and thereafter the resultant was compressed with a roll press, thereby providing a sheet-like positive electrode (positive plate) composed of a positive electrode current collector and a positive electrode active material. The coating density of the positive electrode active material layer was 25 mg/cm², and the packing density was 3.6 g/mL.

Five of the positive plates were produced, and a positive electrode tab was attached to each of the five resulting positive plates.

### <Preparation of Non-Aqueous Electrolyte Solution>

Ethylene carbonate (EC), dimethyl carbonate (DMC) and methyl ethyl carbonate (EMC) were mixed in a proportion of 30:35:35 (mass ratio), respectively, thereby providing a mixed solvent as a non-aqueous solvent.

LiPF₆ as an electrolyte was dissolved in the obtained mixed solvent such that the electrolyte concentration in a non-aqueous electrolyte solution to be finally obtained was 1 mol/L.

Lithium difluorophosphate (amount of addition: 0.5% by mass) as the additive (X) was added to the solution obtained above, and bis(acetylacetonate)copper (II) (amount of addition: 3.0 ppm by mass (corresponding to 0.7 ppm by mass as the amount of the Cu element added)) was further added as the Cu compound, thereby providing a non-aqueous electrolyte solution.

### <Production of Layered Electrode Assembly>

The six negative plates to which the negative electrode tab was attached and the five positive plates to which the positive electrode tab was attached were layered with a microporous polyethylene film (thickness: 20 µm; separator) interposed therebetween, in a direction where the positive electrode tab and the negative electrode tab were arranged on the same side. Here, the positive plates and the negative plates were alternately layered so that both the outermost layers located at both sides were the negative plates. The resulting layered body was wrapped with an insulation tape (separator) for shape holding, thereby providing a layered electrode assembly.

### <Attachment of Positive Electrode Terminal and Negative Electrode Terminal>

The six negative electrode tabs extending from the six respective negative plates were attached to one negative electrode terminal made of copper foil by ultrasonic welding.

The five positive electrode tabs extending from the five respective positive plates were attached to one positive electrode terminal made of aluminum foil by ultrasonic welding.

### <Production of Layered Laminate Type Battery>

The layered electrode assembly to which the positive electrode terminal and the negative electrode terminal were attached was accommodated in an aluminum laminate outer package, and one side of the laminate outer package, located closer to the positive electrode terminal and the negative electrode terminal for the attachment, was heat-sealed. Here, a part of the positive electrode terminal and a part of the negative electrode terminal were made to protrude from the peripheral end portion of the laminate outer package. Each of the parts where the positive electrode terminal and the negative electrode terminal were protruded was sealed by an insulating seal.

Next, two of the remaining three sides of the laminate outer package were heat-sealed.

Next, the non-aqueous electrolyte solution was injected into the laminate outer package through one side, not to be heat-sealed, of the laminate outer package. Thereby, the respective positive plates, the respective negative plates, and the respective separators were impregnated with the non-aqueous electrolyte solution. Next, the one side not to be heat-sealed was heat-sealed, thereby encapsulating the laminate outer package. As described above, a laminate type battery was obtained.

The obtained laminate type battery (test battery) was subjected to each measurement.

### [Evaluation Methods]

### <Measurement of Cu Element Content in Non-Aqueous Electrolyte Solution in Battery>

The laminate type battery was charged at a constant voltage of 4.2 V. Next, the laminate type battery charged was cooled to -20°C in a constant temperature chamber and discharged at -20°C at a constant current of 50 mA.

The non-aqueous electrolyte solution in the laminate type battery discharged was sampled, the resulting sample was subjected to wet decomposition with concentrated nitric acid in a PTFE container and thereafter to constant volume, and the Cu element content was measured by inductively coupled plasma mass spectrometry. Based on the measurement result, the Cu element content in the non-aqueous electrolyte solution in the laminate type battery discharged was determined.

The results obtained are shown in Table 1.

### <Battery Resistance>

The battery resistance (initial battery resistance) of the laminate type battery was evaluated. The detail is indicated below.

The laminate type battery was charged at a constant voltage of 4.2 V. Next, the laminate type battery charged was cooled to -20°C in a constant temperature chamber and discharged at -20°C at a constant current of 50 mA. The decrease in potential for 10 seconds from the start of discharging was measured. Thereby measuring the direct current resistance [Ω] (-20°C) of the laminate type battery. The obtained value was defined as a resistance value [Ω] (-20°C).

The resistance value [Ω] (-20°C) of a laminate type battery of Comparative Example 1A, described below, was also measured in the same manner.

Based on the above results, according to the following expression, the "battery resistance [%]" was determined as the resistance value (relative value; %) in Example 1A under the assumption that the resistance value [Ω] (-20°C) in Comparative Example 1A was 100%.

The results obtained are shown in Table 1.

Battery resistance (relative value; %) = (Resistance value [Ω] (-20°C) in Example 1A/Resistance value [Ω] (-20°C) in Comparative Example 1A) × 100

### [Example 2A]

The same operation as in Example 1A was performed except that Exemplary compound 22 (amount of addition: 0.5% by mass) was further added as other additive in preparation of the non-aqueous electrolyte solution.

Exemplary compound 22 was a specific example of the cyclic sulfate ester compound represented by Formula (I).

The results are shown in Table 1.

### [Comparative Example 1A]

The same operation as in Example 1A was performed except that lithium difluorophosphate and bis(acetylacetonate)copper (II) were not added in preparation of the non-aqueous electrolyte solution.

The results are shown in Table 1.

**[Table 1]**

| | Non-aqueous electrolyte solution | | | | | Lithium secondary battery | |
|---|---|---|---|---|---|---|---|
| | Additive (X) | | Other additive | | Amount of addition of Cu element (ppm by mass) | Cu element content in non-aqueous electrolyte solution in battery (ppm by mass) | Battery resistance (relative value; %) |
| | Type | Amount of addition (% by mass) | Type | Amount of addition (% by mass) | | | |
| Comparative Example 1A | None | - | None | - | 0 | 0.5 | 100 |
| Example 1A | Lithium difluorophosphate | 0.5 | None | - | 0.7 | 1.2 | 96 |
| Example 2A | Lithium difluorophosphate | 0.5 | Exemplary compound 22 | 0.5 | 0.7 | 1.3 | 93 |

As shown in Table 1, the battery resistance was reduced in each of Examples 1A and 2A in which the non-aqueous electrolyte solution containing lithium fluorophosphate as the additive (X) was used and the Cu element content in the non-aqueous electrolyte solution in the battery was from 0.001 ppm by mass to less than 5 ppm by mass, even though such Examples were examples in which the non-aqueous electrolyte solution containing lithium fluorophosphate as the additive (X) was used.

### [Example 1B]

The same operation as in Example 1A was performed except that lithium difluorophosphate (amount of addition: 0.5% by mass) as the additive (X) used in preparation of the non-aqueous electrolyte solution was changed to lithium difluorobis(oxalato)phosphate (amount of addition: 0.5% by mass) as the additive (X).

Lithium difluorobis(oxalato)phosphate was a specific example of the compound represented by Formula (XA).

The results are shown in Table 2.

### [Example 2B]

The same operation as in Example 1B was performed except that Exemplary compound 22 (amount of addition: 0.5% by mass) was further added as other additive in preparation of the non-aqueous electrolyte solution.

Exemplary compound 22 was a specific example of the cyclic sulfate ester compound represented by Formula (I).

The results are shown in Table 2.

### [Example 3B]

The same operation as in Example 1B was performed except that lithium difluorobis(oxalato)phosphate (amount of addition: 0.5% by mass) as the additive (X) used in preparation of the non-aqueous electrolyte solution was changed to lithium bis(oxalato)borate (amount of addition: 0.5% by mass) as the additive (X).

Lithium bis(oxalato)borate was also a specific example of the compound represented by Formula (XA).

The results are shown in Table 2.

**[Table 2]**

| | Non-aqueous electrolyte solution | | | | | Lithium secondary battery | |
|---|---|---|---|---|---|---|---|
| | Additive (X) | | Other additive | | Amount of addition of Cu element (ppm by mass) | Cu element content in non-aqueous electrolyte solution in battery (ppm by mass) | Battery resistance (relative value; %) |
| | Type | Amount of addition (% by mass) | Type | Amount of addition (% by mass) | | | |
| Comparative Example 1A | None | - | None | - | 0 | 0.5 | 100 |
| Example 1B | Lithium difluorobis(oxalato)phosphate | 0.5 | None | - | 0.7 | 1.2 | 97 |
| Example 2B | Lithium difluorobis(oxalato)phosphate | 0.5 | Exemplary compound 22 | 0.5 | 0.7 | 1.4 | 94 |
| Example 3B | Lithium bis(oxalato)borate | 0.5 | None | - | 0.7 | 1.3 | 98 |

As shown in Table 2, the battery resistance was reduced in each of Examples 1B to 3B where the non-aqueous electrolyte solution containing lithium difluorobis(oxalato)phosphate or lithium bis(oxalato)borate as the additive (X) was used and the Cu element content in the non-aqueous electrolyte solution in the battery was from 0.001 ppm by mass to less than 5 ppm by mass, even though such Examples were examples in which the non-aqueous electrolyte solution containing lithium difluorobis(oxalato)phosphate or lithium bis(oxalato)borate as the additive (X) was used.

### [Example 1C]

The same operation as in Example 1A was performed except that lithium difluorophosphate (amount of addition: 0.5% by mass) as the additive (X) used in preparation of the non-aqueous electrolyte solution was changed to 1,3-propanesultone (amount of addition: 0.5% by mass) as the additive (X).

1,3-Propanesultone was a sulfonate ester compound where all R^{B1} to R^{B6} were hydrogen atoms and n represented 1 in Formula (B).

The results are shown in Table 3.

### [Example 2C]

The same operation as in Example 1C was performed except that Exemplary compound 22 (amount of addition: 0.5% by mass) was further added as other additive in preparation of the non-aqueous electrolyte solution.

Exemplary compound 22 was a specific example of the cyclic sulfate ester compound represented by Formula (I).

The results are shown in Table 3.

### [Example 3C]

The same operation as in Example 1C was performed except that 1,3-propanesultone (amount of addition: 0.5% by mass) as the additive (X) used in preparation of the non-aqueous electrolyte solution was changed to 1,3-propenesultone (amount of addition: 0.5% by mass) as the additive (X).

1,3-Propenesultone was a sulfonate ester compound where all R^{C1} to R^{C4} were hydrogen atoms and n represented 1 in Formula (C).

The results are shown in Table 3.

### [Example 4C]

The same operation as in Example 1C was performed except that 1,3-propanesultone (amount of addition: 0.5% by mass) as the additive (X) used in preparation of the non-aqueous electrolyte solution was changed to propargyl methanesulfonate (amount of addition: 0.5% by mass) as the additive (X).

Propargyl methanesulfonate was a sulfonate ester compound where R^{A1} represented a methyl group and R^{A2} represented a propargyl group in Formula (A). Propargyl methanesulfonate was also a sulfonate ester compound where R^{A11} represented a methyl group and m represents 1 in Formula (A-1).

The results are shown in Table 3.

**[Table 3]**

| | Non-aqueous electrolyte solution | | | | | Lithium secondary battery | |
|---|---|---|---|---|---|---|---|
| | Additive (X) | | Other additive | | Amount of addition of Cu element (ppm by mass) | Cu element content in non-aqueous electrolyte solution in battery (ppm by mass) | Battery resistance (relative value; %) |
| | Type | Amount of addition (% by mass) | Type | Amount of addition (% by mass) | | | |
| Comparative Example 1A | None | - | None | - | 0 | 0.5 | 100 |
| Example 1C | 1.3-Propanesultone | 0.5 | None | - | 0.7 | 1.2 | 97 |
| Example 2C | 1.3-Propanesultone | 0.5 | Exemplary compound 22 | 0.5 | 0.7 | 1.4 | 95 |
| Example 3C | 1.3-propenesultone | 0.5 | None | - | 0.7 | 1.2 | 98 |
| Example 4C | Propargyl methanesulfonate | 0.5 | None | - | 0.7 | 1.3 | 97 |

As shown in Table 3, the battery resistance was reduced in each of Examples 1C to 4C where the non-aqueous electrolyte solution containing 1,3-propanesultone, 1,3-propenesultone, or propargyl methanesulfonate as the additive (X) was used and the Cu element content in the non-aqueous electrolyte solution in the battery was from 0.001 ppm by mass to less than 5 ppm by mass, even though such Examples were examples in which the non-aqueous electrolyte solution containing 1,3-propanesultone, 1,3-propenesultone, or propargyl methanesulfonate as the additive (X) was used.

## Claims

1. A non-aqueous electrolyte solution for a battery, comprising a positive electrode, an electrolyte and a negative electrode comprising negative electrode current collector containing a copper element, said electrolyte solution comprising a copper compound and
an additive (X) that is at least one compound selected from the group consisting of lithium monofluorophosphate, lithium difluorophosphate, a compound represented by the following Formula (XA), a sulfonate ester compound represented by the following Formula (A), a sulfonate ester compound represented by the following Formula (B), a sulfonate ester compound represented by the following Formula (C), and a sulfonate ester compound represented by the following Formula (D),
wherein the non-aqueous electrolyte solution is to be incorporated into a battery as the electrolyte,
wherein a content of a copper element with respect to a total amount of the non-aqueous electrolyte solution is from 0.001 ppm by mass to less than 5 ppm by mass, and
wherein in a case in which the non-aqueous electrolyte solution is incorporated into a battery,_a content of a copper element with respect to a total amount of the non-aqueous electrolyte solution for a battery is from 0.001 ppm by mass to less than 5 ppm by mass: 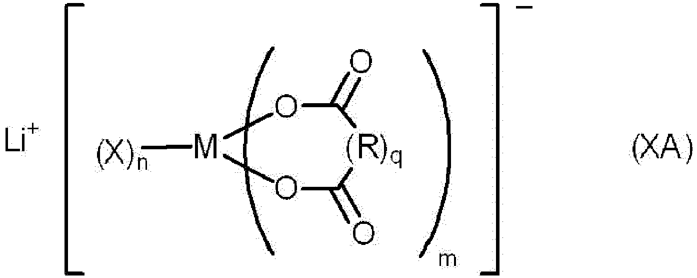 wherein, in Formula (XA), M represents a boron atom or a phosphorus atom, X represents a halogen atom, R represents an alkylene group having from 1 to 10 carbon atoms, a halogenated alkylene group having from 1 to 10 carbon atoms, an arylene group having from 6 to 20 carbon atoms, or a halogenated arylene group having from 6 to 20 carbon atoms, wherein such groups may each comprise a substituent or a hetero atom in a structure thereof, m represents an integer from 1 to 3, n represents an integer from 0 to 4, and q represents 0 or 1; 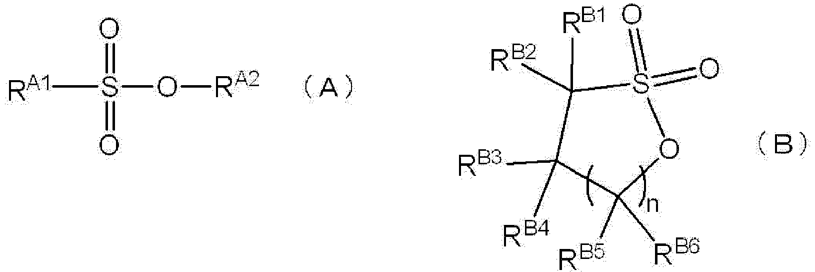 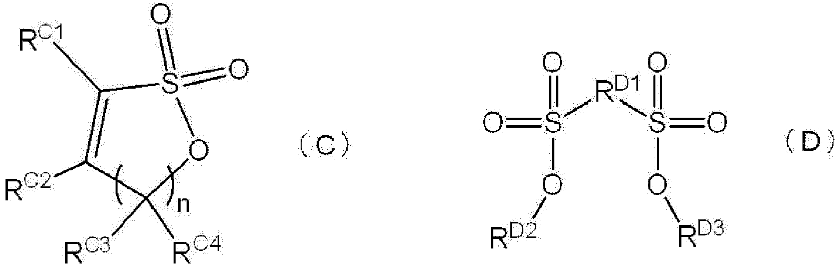 wherein, in Formula (A), R^{A1} and R^{A2} each independently represent a straight or branched aliphatic hydrocarbon group having from 1 to 12 carbon atoms, an aryl group having from 6 to 12 carbon atoms, or a heterocyclic group having from 6 to 12 carbon atoms, wherein such groups may each be substituted with a halogen atom, and the aliphatic hydrocarbon group may be substituted with at least one of an alkoxy group, an alkenyloxy group or an alkynyloxy group;
wherein, in Formula (B), R^{B1} to R^{B6} each independently represent a hydrogen atom, a halogen atom, or an alkyl group having from 1 to 6 carbon atoms that may be substituted with a halogen atom, and n represents an integer from 0 to 3;
wherein, in Formula (C), R^{C1} to R^{C4} each independently represent a hydrogen atom, a halogen atom, or an alkyl group having from 1 to 6 carbon atoms that may be substituted with a halogen atom, and n represents an integer from 0 to 3;
wherein, in Formula (D), R^{D1} represents an aliphatic hydrocarbon group having from 1 to 10 carbon atoms, or a halogenated alkylene group having from 1 to 3 carbon atoms, R^{D2} and R^{D3} each independently represent an alkyl group having from 1 to 6 carbon atoms, or an aryl group, or R^{D2} and R^{D3} taken together represent an alkyl ene group having from 1 to 10 carbon atoms, or a 1,2-phenylene group that may be substituted with a halogen atom, an alkyl group having from 1 to 12 carbon atoms, or a cyano group.

2. The non-aqueous electrolyte solution for a battery according to claim 1,
wherein the additive (X) is at least one of lithium monofluorophosphate or lithium difluorophosphate.

3. The non-aqueous electrolyte solution for a battery according to claim 2,
wherein the additive (X) comprises lithium difluorophosphate.

4. The non-aqueous electrolyte solution for a battery according to claim 1,
wherein the additive (X) is a compound represented by Formula (XA).

5. The non-aqueous electrolyte solution for a battery according to claim 4,
wherein the compound represented by Formula (XA) is at least one selected from the group consisting of lithium difluorobis(oxalato)phosphate, lithium tetrafluoro(oxalato)phosphate, lithium difluoro(oxalato)borate and lithium bis(oxalato)borate.

6. The non-aqueous electrolyte solution for a battery according to claim 1,
wherein the additive (X) is at least one compound selected from the group consisting of the sulfonate ester compound represented by Formula (A), the sulfonate ester compound represented by Formula (B), the sulfonate ester compound represented by Formula (C) and the sulfonate ester compound represented by Formula (D).

7. The non-aqueous electrolyte solution for a battery according to any one of claims 1 to 6, wherein a content of the additive (X) is from 0.001% by mass to 5% by mass with respect to a total amount of the non-aqueous electrolyte solution.

8. The non-aqueous electrolyte solution for a battery according to any one of claims 1 to 7, further comprising a cyclic sulfate ester compound represented by the following Formula (I): 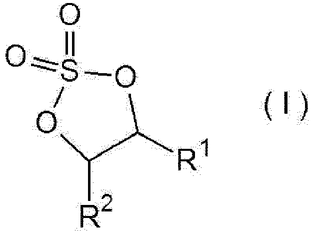 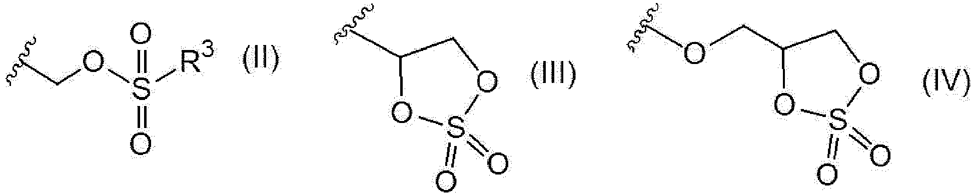 wherein, in Formula (I), R¹ and R² each independently represent a hydrogen atom, an alkyl group having from 1 to 6 carbon atoms, a phenyl group, a group represented by Formula (II), or a group represented by Formula (III), or R¹ and R² taken together represent a group that forms a benzene ring or a cyclohexyl ring together with a carbon atom bound to R¹ and a carbon atom bound to R²; and
wherein, in Formula (II), R³ represents a halogen atom, an alkyl group having from 1 to 6 carbon atoms, a halogenated alkyl group having from 1 to 6 carbon atoms, an alkoxy group having from 1 to 6 carbon atoms, or a group represented by Formula (IV), and each wavy line in Formula (II), Formula (III), and Formula (IV) represents a bonding position; and
in a case in which the cyclic sulfate ester compound represented by Formula (I) includes two groups represented by Formula (II), the two groups represented by Formula (II) may be the same as or different from each other.

9. A lithium secondary battery comprising:
a positive electrode;
a negative electrode comprising a negative electrode current collector containing a copper element, and, as a negative electrode active material, at least one material selected from the group consisting of metal lithium, a lithium-containing alloy, a metal or an alloy capable of alloying with lithium, an oxide capable of doping and dedoping with a lithium ion, a transition metal nitride capable of doping and dedoping with a lithium ion and a carbon material capable of doping and dedoping with a lithium ion; and
the non-aqueous electrolyte solution for a battery according to any one of claims 1 to 8.

10. A lithium secondary battery obtained by charging and discharging the lithium secondary battery according to claim 9.

11. The non-aqueous electrolyte solution for a battery according to claim 1, wherein the copper compound is selected from the group consisting of copper (II) phosphate, copper (II) sulfate, copper (II) nitrate, copper (I) acetate, copper (II) acetate, copper (II) carbonate, copper (I) cyanide, copper (II) oxalate, copper (II) citrate, copper(II) gluconate, copper (II) perchlorate, copper (II) fluoride, copper (I) chloride, copper(II) chloride, copper (II) hydroxide, tetrakis(acetonitrile)copper (I) hexafluorophosphate, copper (II) hexafluorophosphate, tetrakis(acetonitrile)copper (I) tetrafluoroborate, copper (II) tetrafluoroborate, copper (I) trifluoromethanesulfonate, copper (II)trifluoromethanesulfonate, copper (II) difluorophosphate, copper (II)monofluorophosphate, bis(ethoxide)copper (II), copper (I) acetylacetonate, and bis(acetylacetonato)copper (II).

## Patentansprüche

1. Nichtwässrige Elektrolytlösung für eine Batterie, umfassend eine positive Elektrode, einen Elektrolyten und eine negative Elektrode, umfassend einen negativen Elektrodenstromkollektor, der ein Kupferelement enthält; wobei die Elektrolytlösung eine Kupferverbindung umfasst; und ein Additiv (X), das mindestens eine Verbindung ausgewählt aus der Gruppe bestehend aus Folgendem ist: Lithiummonofluorophosphat, Lithiumdifluorophosphat, eine Verbindung, dargestellt durch die folgende Formel (XA), eine Sulfonatesterverbindung, dargestellt durch die folgende Formel (A), eine Sulfonatesterverbindung, dargestellt durch die folgende Formel (B), eine Sulfonatesterverbindung, dargestellt durch die folgende Formel (C), eine Sulfonatesterverbindung, dargestellt durch die folgende Formel (D),
wobei die nichtwässrige Elektrolytlösung als Elektrolyt in eine Batterie eingefügt werden soll,
wobei ein Gehalt eines Kupferelements in Bezug auf eine Gesamtmenge der nichtwässrigen Elektrolytlösung von 0,001 Massen-ppm bis weniger als 5 Massen-ppm beträgt, und
wobei in einem Fall, in dem die nichtwässrige Elektrolytlösung in eine Batterie eingefügt ist, ein Gehalt eines Kupferelements in Bezug auf eine Gesamtmenge der nichtwässrigen Elektrolytlösung für eine Batterie von 0,001 Massen-ppm bis weniger als 5 Massen-ppm beträgt: 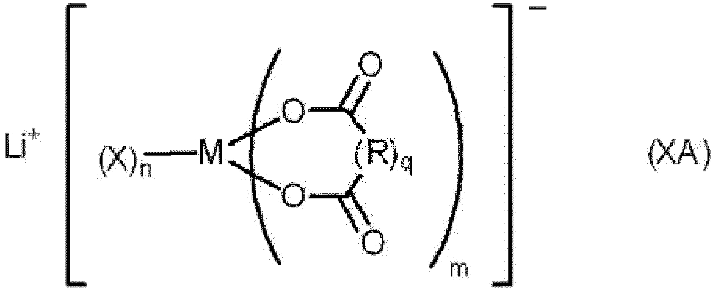 wobei in Formel (XA) M ein Boratom oder ein Phosphoratom darstellt, X ein Halogenatom darstellt, R eine Alkylengruppe mit 1 bis 10 Kohlenstoffatomen, eine halogenierte Alkylengruppe mit 1 bis 10 Kohlenstoffatomen, eine Arylengruppe mit 6 bis 20 Kohlenstoffatomen oder eine halogenierte Arylengruppe mit 6 bis 20 Kohlenstoffatomen darstellt, wobei solche Gruppen jeweils einen Substituenten oder ein Heteroatom in einer Struktur davon umfassen können,
m eine ganze Zahl von 1 bis 3 darstellt, n eine ganze Zahl von 0 bis 4 darstellt und q 0 oder 1 darstellt; 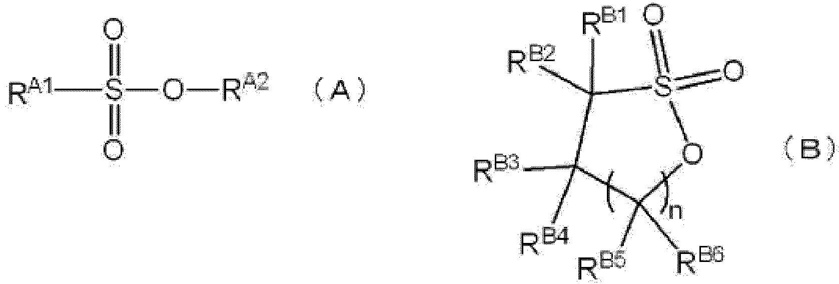 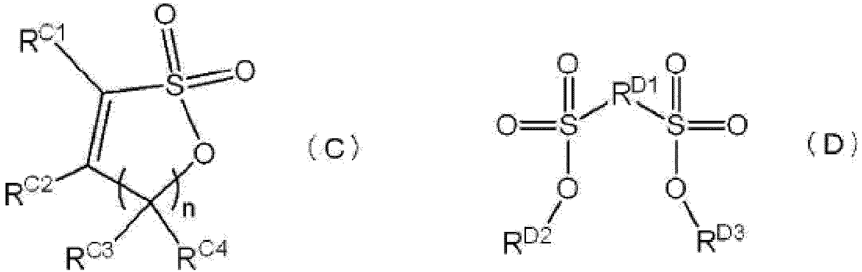 wobei in Formel (A) R^{A1} und R^{A2} jeweils unabhängig voneinander Folgendes darstellen: eine gerade oder verzweigte aliphatische Kohlenwasserstoffgruppe mit 1 bis 12 Kohlenstoffatomen, eine Arylgruppe mit 6 bis 12 Kohlenstoffatomen oder eine heterocyclische Gruppe mit 6 bis 12 Kohlenstoffatomen, wobei solche Gruppen jeweils mit einem Halogenatom substituiert sein können und die aliphatische Kohlenwasserstoffgruppe mit mindestens einer Alkoxygruppe, einer Alkenyloxygruppe oder einer Alkinyloxygruppe substituiert sein kann;
wobei in Formel (B) R^{B1} bis R^{B6} jeweils unabhängig voneinander ein Wasserstoffatom, ein Halogenatom oder eine Alkylgruppe mit 1 bis 6 Kohlenstoffatomen darstellen, die mit einem Halogenatom substituiert sein können, und n eine ganze Zahl von 0 bis 3 darstellt;
wobei in Formel (C) R^{C1} bis R^{C4} jeweils unabhängig voneinander ein Wasserstoffatom, ein Halogenatom oder eine Alkylgruppe mit 1 bis 6 Kohlenstoffatomen darstellen, die mit einem Halogenatom substituiert sein können, und n eine ganze Zahl von 0 bis 3 darstellt;
wobei in Formel (D) R^{D1} eine aliphatische Kohlenwasserstoffgruppe mit 1 bis 10 Kohlenstoffatomen oder eine halogenierte Alkylengruppe mit 1 bis 3 Kohlenstoffatomen darstellt, wobei R^{D2} und R^{D3} jeweils unabhängig voneinander eine Alkylgruppe mit 1 bis 6 Kohlenstoffatomen oder eine Arylgruppe darstellen, oder R^{D2} und R^{D3} zusammen eine Alkylengruppe mit 1 bis 10 Kohlenstoffatomen oder eine 1,2-Phenylengruppe, die mit einem Halogenatom substituiert sein kann, eine Alkylgruppe mit 1 bis 12 Kohlenstoffatomen oder ein Cyanogruppe darstellen.

2. Nichtwässrige Elektrolytlösung für eine Batterie nach Anspruch 1,
wobei das Additiv (X) Lithiummonofluorophosphat und/oder Lithiumdifluorophosphat ist.

3. Nichtwässrige Elektrolytlösung für eine Batterie nach Anspruch 2, wobei das Additiv (X) Lithiumdifluorophosphat umfasst.

4. Nichtwässrige Elektrolytlösung für eine Batterie nach Anspruch 1, wobei das Additiv (X) eine durch die Formel (XA) dargestellte Verbindung ist.

5. Nichtwässrige Elektrolytlösung für eine Batterie nach Anspruch 4, wobei die durch die Formel (XA) dargestellte Verbindung mindestens eine ist, die aus der Gruppe ausgewählt wird, die aus Lithiumdifluorobis(oxalato)phosphat, Lithiumtetrafluor(oxalato)phosphat, Lithiumdifluor(oxalato)borat und Lithiumbis(oxalato)borat besteht.

6. Nichtwässrige Elektrolytlösung für eine Batterie nach Anspruch 1, wobei das Additiv (X) mindestens eine Verbindung ist, die aus der Gruppe ausgewählt wird, die aus der durch die Formel (A) dargestellte Sulfonatesterverbindung, der durch die Formel (B) dargestellte Sulfonatesterverbindung, der durch die Formel (C) dargestellte Sulfonatesterverbindung und der durch die Formel (D) dargestellte Sulfonatesterverbindung besteht.

7. Nichtwässrige Elektrolytlösung für eine Batterie nach einem der Ansprüche 1 bis 6, wobei ein Gehalt des Additivs (X) von 0,001 Massen-% bis 5 Massen-% bezogen auf eine Gesamtmenge der nichtwässrigen Elektrolytlösung beträgt.

8. Nichtwässrige Elektrolytlösung für eine Batterie nach einem der Ansprüche 1 bis 7, die ferner eine cyclische Sulfatesterverbindung umfasst, die durch die folgende Formel (I) dargestellt wird: 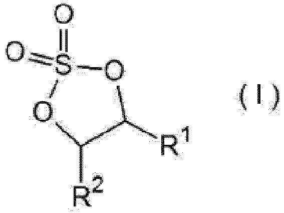 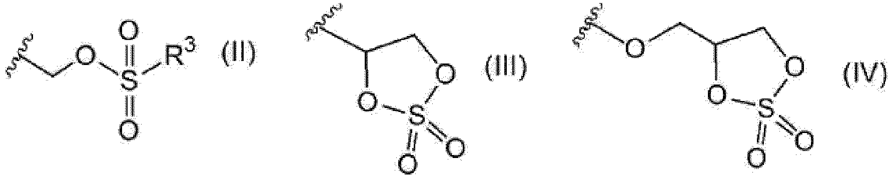 wobei in Formel (I) R¹ und R² jeweils unabhängig voneinander ein Wasserstoffatom, eine Alkylgruppe mit 1 bis 6 Kohlenstoffatomen, eine Phenylgruppe, eine durch Formel (II) dargestellte Gruppe oder eine durch Formel (III) dargestellte Gruppe darstellen, oder R¹ und R² zusammen eine Gruppe darstellen, die zusammen mit einem an R¹ gebundenen Kohlenstoffatom und einem an R² gebundenen Kohlenstoffatom einen Benzolring oder einen Cyclohexylring bildet; und
wobei in Formel (II) R³ ein Halogenatom, eine Alkylgruppe mit 1 bis 6 Kohlenstoffatomen, eine halogenierte Alkylgruppe mit 1 bis 6 Kohlenstoffatomen, eine Alkoxygruppe mit 1 bis 6 Kohlenstoffatomen, oder eine durch Formel (IV) dargestellte Gruppe darstellt, und jede Wellenlinie in Formel (II), Formel (III) und Formel (IV) eine Bindungsposition darstellt; und
in einem Fall, in dem die durch Formel (I) dargestellte cyclische Sulfatesterverbindung zwei durch Formel (II) dargestellte Gruppen enthält, die zwei durch Formel (II) dargestellten Gruppen gleich oder voneinander verschieden sein können.

9. Lithium-Sekundärbatterie, die Folgendes umfasst:
eine positive Elektrode;
eine negative Elektrode, die einen negativen Elektrodenstromkollektor umfasst, der ein Kupferelement enthält, und die als negatives Elektrodenaktivmaterial mindestens ein Material umfasst, das aus der Gruppe ausgewählt wird, die aus Metalllithium, einer lithiumhaltigen Legierung, einem Metall oder einer Legierung, die mit Lithium legiert werden kann, einem Oxid, das mit einem Lithiumion dotiert und entdotiert werden kann, einem Übergangsmetallnitrid, das mit einem Lithiumion dotiert und entdotiert werden kann, und einem Kohlenstoffmaterial, das mit einem Lithiumion dotiert und entdotiert werden kann, besteht; und
die nichtwässrige Elektrolytlösung für eine Batterie nach einem der Ansprüche 1 bis 8.

10. Lithium-Sekundärbatterie, die durch Laden und Entladen der Lithium-Sekundärbatterie nach Anspruch 9 erhalten wird.

11. Nichtwässrige Elektrolytlösung für eine Batterie nach Anspruch 1, wobei die Kupferverbindung aus der Gruppe ausgewählt ist, die aus Kupfer(II)phosphat, Kupfer(II)sulfat, Kupfer(II)nitrat, Kupfer(I)acetat, Kupfer(II)acetat, Kupfer(II)carbonat, Kupfer(I)cyanid, Kupfer(II)oxalat, Kupfer(II)citrat, Kupfer(II)gluconat, Kupfer(II)perchlorat, Kupfer(II)fluorid, Kupfer(I)chlorid, Kupfer(II)chlorid, Kupfer(II)hydroxid, Tetrakis(acetonitril)kupfer(I)hexafluorophosphat, Kupfer(II)hexafluorophosphat, Tetrakis(acetonitril)kupfer(I)tetrafluorborat, Kupfer(II)tetrafluorborat, Kupfer(I)trifluormethansulfonat, Kupfer(II)trifluormethansulfonat, Kupfer(II)difluorophosphat, Kupfer(II)monofluorophosphat, Bis(ethoxid)kupfer(II), Kupfer(I)acetylacetonat und Bis(acetylacetonato)kupfer(II) besteht.

## Revendications

1. Solution d'électrolyte non aqueuse pour une batterie, comprenant une électrode positive, un électrolyte et une électrode négative comprenant un collecteur de courant d'électrode négative contenant un élément de cuivre, ladite solution d'électrolyte comprenant un composé de cuivre et un additif (X) qui est au moins un composé choisi dans le groupe constitué par le monofluorophosphate de lithium, le difluorophosphate de lithium, un composé représenté par la formule (XA) suivante, un composé de sulfonate d'ester représenté par la formule (A) suivante, un composé de sulfonate d'ester représenté par la formule (B) suivante, un composé de sulfonate d'ester représenté par la formule (C) suivante, et un composé de sulfonate d'ester représenté par la formule (D) suivante,
dans laquelle la solution d'électrolyte non aqueuse doit être incorporée dans une batterie en tant qu'électrolyte,
dans laquelle une teneur d'un élément en cuivre par rapport à une quantité totale de la solution d'électrolyte non aqueuse est de 0,001 ppm en masse à moins de 5 ppm en masse, et
dans laquelle, dans le cas où la solution d'électrolyte non aqueuse est incorporée dans une batterie, une teneur d'un élément en cuivre par rapport à une quantité totale de la solution d'électrolyte non aqueuse pour une batterie est de 0,001 ppm en masse à moins de 5 ppm en masse : 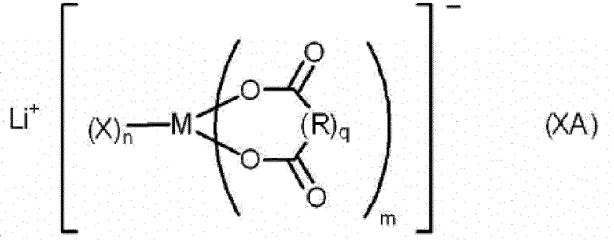 dans laquelle, dans la formule (XA), M représente un atome de bore ou un atome de phosphore, X représente un atome d'halogène, R représente un groupe alkylène ayant de 1 à 10 atomes de carbone, un groupe alkylène halogéné ayant de 1 à 10 atomes de carbone, un groupe arylène ayant de 6 à 20 atomes de carbone, ou un groupe arylène halogéné ayant de 6 à 20 atomes de carbone, dans laquelle ces groupes peuvent chacun comprendre un substituant ou un hétéroatome dans une structure de ceux-ci, m représente un entier de 1 à 3, n représente un entier de 0 à 4 et q représente 0 ou 1 ; 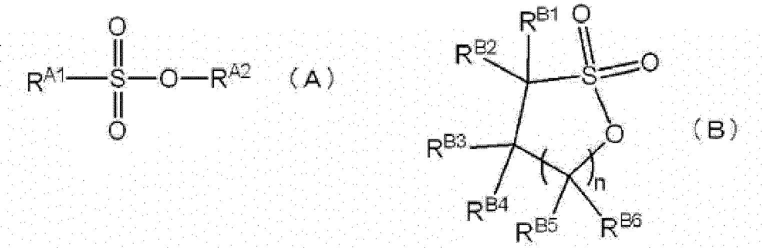 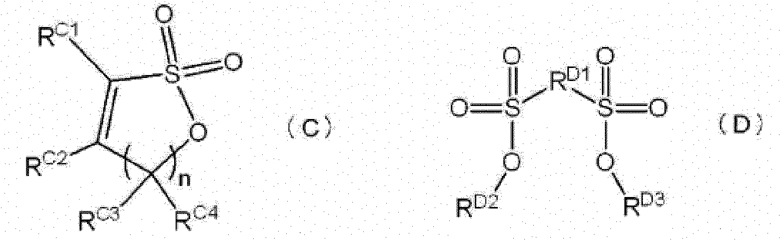 dans laquelle, dans la formule (A), R^{A1} et R^{A2} représentent chacun indépendamment un groupe hydrocarboné aliphatique linéaire ou ramifié ayant de 1 à 12 atomes de carbone, un groupe aryle ayant de 6 à 12 atomes de carbone, ou un groupe hétérocyclique ayant de 6 à 12 atomes de carbone, dans laquelle ces groupes peuvent chacun être substitués par un atome d'halogène, et le groupe hydrocarboné aliphatique peut être substitué par au moins l'un parmi un groupe alkoxy, un groupe alkényloxy ou un groupe alkynyloxy ;
dans laquelle, dans la formule (B), R^{B1} à R^{B6} représentent chacun indépendamment un atome d'hydrogène, un atome d'halogène ou un groupe alkyle ayant de 1 à 6 atomes de carbone qui peut être substitué par un atome d'halogène, et n représente un entier de 0 à 3 ;
dans laquelle, dans la formule (C), R^{C1} à R^{C4} représentent chacun indépendamment un atome d'hydrogène, un atome d'halogène ou un groupe alkyle ayant de 1 à 6 atomes de carbone qui peut être substitué par un atome d'halogène, et n représente un entier de 0 à 3 ;
dans laquelle, dans la formule (D), R^{D1} représente un groupe hydrocarboné aliphatique ayant de 1 à 10 atomes de carbone, ou un groupe alkylène halogéné ayant de 1 à 3 atomes de carbone, R^{D2} et R^{D3} représentent chacun indépendamment un groupe alkyle ayant de 1 à 6 atomes de carbone atomes, ou un groupe aryle, ou R^{D2} et R^{D3} pris ensemble représentent un groupe alkylène ayant de 1 à 10 atomes de carbone, ou un groupe 1,2-phénylène qui peut être substitué par un atome d'halogène, un groupe alkyle ayant de 1 à 12 des atomes de carbone ou un groupe cyano.

2. Solution d'électrolyte non aqueuse pour une batterie selon la revendication 1, dans laquelle l'additif (X) est au moins l'un parmi le monofluorophosphate de lithium ou le difluorophosphate de lithium.

3. Solution d'électrolyte non aqueuse pour une batterie selon la revendication 2, dans laquelle l'additif (X) comprend du difluorophosphate de lithium.

4. Solution d'électrolyte non aqueuse pour une batterie selon la revendication 1, dans laquelle l'additif (X) est un composé représenté par la formule (XA).

5. Solution d'électrolyte non aqueuse pour une batterie selon la revendication 4, dans laquelle le composé représenté par la formule (XA) est au moins un composé choisi dans le groupe constitué par le difluorobis(oxalato)phosphate de lithium, le tétrafluoro(oxalato)phosphate de lithium, le difluoro(oxalato)borate de lithium et le bis(oxalato)borate de lithium.

6. Solution d'électrolyte non aqueuse pour une batterie selon la revendication 1, dans laquelle l'additif (X) est au moins un composé choisi dans le groupe constitué par le composé de sulfonate d'ester représenté par la formule (A), le composé de sulfonate d'ester représenté par Formule (B), le composé de sulfonate d'ester représenté par la formule (C) et le composé de sulfonate d'ester représenté par la formule (D).

7. Solution d'électrolyte non aqueuse pour une batterie selon l'une quelconque des revendications 1 à 6, dans laquelle une teneur en additif (X) est de 0,001% en masse à 5% en masse par rapport à une quantité totale de la solution d'électrolyte non aqueuse.

8. Solution d'électrolyte non aqueuse pour une batterie selon l'une quelconque des revendications 1 à 7, comprenant en outre un composé de sulfate d'ester cyclique représenté par la formule (I) suivante : 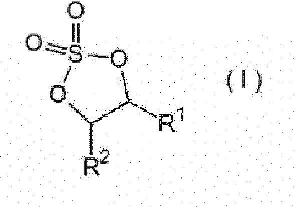 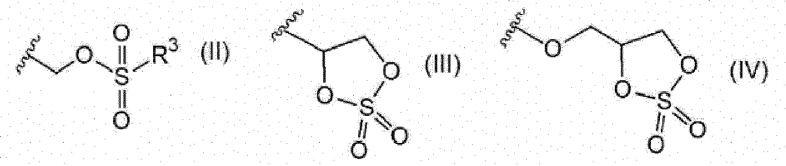 dans laquelle, dans la formule (I), R¹ et R² représentent chacun indépendamment un atome d'hydrogène, un groupe alkyle ayant de 1 à 6 atomes de carbone, un groupe phényle, un groupe représenté par la formule (II) ou un groupe représenté par la formule (III), ou R¹ et R² pris ensemble représentent un groupe qui forme un cycle benzène ou un cycle cyclohexyle avec un atome de carbone lié à R¹ et un atome de carbone lié à R² ; et
dans laquelle, dans la formule (II), R³ représente un atome d'halogène, un groupe alkyle ayant de 1 à 6 atomes de carbone, un groupe alkyle halogéné ayant de 1 à 6 atomes de carbone, un groupe alkoxy ayant de 1 à 6 atomes de carbone, ou un groupe représenté par la formule (IV), et chaque ligne ondulée dans la formule (II), la formule (III) et la formule (IV) représente une position de liaison ; et
dans un cas dans lequel le composé de sulfate d'ester cyclique représenté par la formule (I) comprend deux groupes représentés par la formule (II), les deux groupes représentés par la formule (II) peuvent être identiques ou différents l'un de l'autre.

9. Batterie secondaire au lithium comprenant :
une électrode positive ;
une électrode négative comprenant un collecteur de courant d'électrode négative contenant un élément en cuivre, et, en tant que matériau actif d'électrode négative, au moins un matériau choisi dans le groupe constitué par le lithium métallique, un alliage contenant du lithium, un métal ou un alliage capable de s'allier avec du lithium, un oxyde capable de dopage et de dédopage avec un ion lithium, un nitrure de métal de transition capable de dopage et de dédopage avec un ion lithium et un matériau carboné capable de dopage et de dédopage avec un ion lithium ; et
la solution d'électrolyte non aqueuse pour une batterie selon l'une quelconque des revendications 1 à 8.

10. Batterie secondaire au lithium obtenue en chargeant et en déchargeant la batterie secondaire au lithium selon la revendication 9.

11. Solution d'électrolyte non aqueuse pour une batterie selon la revendication 1, dans laquelle le composé de cuivre est choisi dans le groupe constitué par le phosphate de cuivre (II), le sulfate de cuivre (II), le nitrate de cuivre (II), l'acétate de cuivre (I), l'acétate de cuivre (II), le carbonate de cuivre (II), le cyanure de cuivre (I), l'oxalate de cuivre (II), le citrate de cuivre (II), le gluconate de cuivre (II), le perchlorate de cuivre (II), le fluorure de cuivre (II), le chlorure de cuivre (I), le chlorure de cuivre (II), l'hydroxyde de cuivre (II), l'hexafluorophosphate de cuivre (I) de tétrakis (acétonitrile), l'hexafluorophosphate de cuivre (II), le tétrafluoroborate de cuivre (I) de tétrakis (acétonitrile), le tétrafluoroborate de cuivre (II), le trifluorométhanesulfonate de cuivre (I), le trifluorométhanesulfonate cuivre (I), le difluorophosphate de cuivre (II), le monofluorophosphate de cuivre (II), le bis(éthylate) de cuivre (II), l'acétylacétonate de cuivre (I) et le bis(acétylacétonato) cuivre (II).
